# EUROPEAN PATENT SPECIFICATION

(11) **EP 2 284 229 B1**
(45) Date of publication and mention of the grant of the patent: **06.09.2017**
(21) Application number: 10169959.3
(22) Date of filing: 19.07.2010
(51) Int. Cl.: C09D 11/00, C09D 11/10, B41J 2/00, C09D 17/00

(54) **Pigment dispersion, ink composition, and inkjet recording method**
Pigmentdispersion, Tintenzusammensetzung und Tintenstrahlaufnahmeverfahren
Dispersion de pigments, composition d'encre et procédé d'enregistrement à jet d'encre

(30) Priority: 28.07.2009 JP 2009175225
(43) Date of publication of application: 16.02.2011
(73) Proprietor: FUJIFILM Corporation, Tokyo (JP)
(72) Inventor: Umebayashi, Tsutomu, KANAGAWA (JP)
(74) Representative: Klunker IP Patentanwälte PartG mbB

(56) References cited:
- EP-A1- 1 739 141
- EP-A1- 1 834 997
- EP-A2- 1 702 960
- EP-A2- 2 058 375
- US-A1- 2008 233 362

## Description

The present invention relates to a pigment dispersion, an ink composition, and an inkjet recording method.

Inkjet systems, in which ink is discharged as droplets from an ink discharge orifice, are employed in many printers for reasons such as small size, low cost, and an ability to form an image without contacting a recording medium. Among these inkjet systems, a piezo inkjet system, in which ink is discharged by utilizing deformation of a piezoelectric element, and a thermal inkjet system, in which droplets of ink are discharged by utilizing the phenomenon of boiling of the ink by means of thermal energy, are characterized by their high resolution and high speed printing properties.

In recent years, inkjet printers have not been limited only to photographic printing and document printing for home use or office use, and the development of commercial printing equipment and industrial printing equipment employing inkjet printers has been carried out.

In contrast to conventional inkjet ink compositions and inkjet recording methods for home use or office use, there is a strong requirement for inkjet ink compositions and recording methods intended for use in commercial printing equipment or industrial printing equipment to have wide color reproduction in a formed image, and an excellent prolonged discharge reliability.

JP-PCT-2000-504778 (JP-PCT denotes a published Japanese translation of a PCT application) discloses a radiation-curing inkjet composition comprising a photopolymerization initiator and 80 wt % to 95 wt %, of the total composition, of a polyfunctional alkoxy and/or polyfunctional polyalkoxyacrylate monomer.

Moreover, with regard to a yellow ink, for example, JP-A-2004-2528 discloses a UV-curing inkjet recording ink composition comprising at least a yellow pigment, a photopolymerizable compound, and a photopolymerization initiator, the yellow pigment comprising Colour Index (C.I.) Pigment Yellow 180, and the composition comprising a polymeric dispersant having a basic adsorbing group.

JP-A-2005-105225 discloses an actinic radiation-curing inkjet ink composition comprising a photo-acid generator, a photopolymerizable compound, and a pigment, the pigment comprising C.I. Pigment Yellow 185.

JP-A-2007-204664 discloses a process for producing a nonaqueous pigment dispersion comprising at least a pigment, a dispersant, and a polymerizable compound, with as the dispersant a polymer comprising a repeating unit having a heterocyclic residue forming an organic pigment.

It is an object of the present invention to provide a pigment dispersion that has excellent flowability, dispersibility, and storage stability.

It is another object of the present invention to provide an ink composition having excellent curability, hue/saturation, hue/color density, storage stability, cured coating light fastness, and discharge reliability, and an inkjet recording method employing the ink composition.

The above-mentioned objects of the present invention have been attained by means below.
<1> An inkjet recording method comprising a step of discharging an ink composition onto a recording medium and a step of curing the ink composition by irradiating the discharged ink composition with actinic radiation; wherein the ink composition comprises: C.I. Pigment Yellow 185; and a polymer having a repeating unit represented by Formula (1) 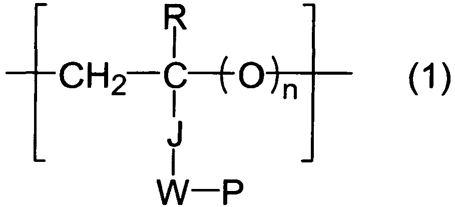 (in Formula (1), R denotes a hydrogen atom or a methyl group, J denotes -CO-, - COO-, -CONR¹-, -OCO-, a methylene group, or a phenylene group, R¹ denotes a hydrogen atom, an alkyl group, or an aryl group, n denotes 0 or 1, W denotes a single bond or a divalent linking group, and P denotes a heterocyclic residue or aromatic quinone structure-containing residue forming a basic skeleton of an organic pigment),
<2> A method according to <1>, wherein the C.I. Pigment Yellow 185 has a content of 15 to 35 wt % relative to the total amount of the pigment dispersion,
<3> A pigment dispersion comprising C.I. Pigment Yellow 185 and a polymer having a repeating unit represented by Formula (1), as defined in <1>, and a repeating unit derived from a polymerizable oligomer or polymerizable polymer having an ethylenically unsaturated bond at a terminal.
<4> The pigment dispersion according to <3>, wherein the polymer having a repeating unit represented by Formula (1) further comprises a repeating unit derived from a monomer having a nitrogen atom,
<5> The pigment dispersion according to <3> or <4>, wherein the polymer having a repeating unit represented by Formula (1) has a content of 5 to 10 wt % relative to the total amount of the pigment dispersion,
<6> The pigment dispersion according to any one of <3> to <5>, which comprises a polymerizable compound,
<7> The pigment dispersion according to <6>, wherein the polymerizable compound comprises a cationically polymerizable compound and/or a radically polymerizable compound,
<8> An ink composition comprising a pigment dispersion according to <3>,
<9> The ink composition according to <8>, wherein the C.I. Pigment Yellow 185 has a content of 5 to 12 wt % relative to the total amount of the ink composition,
<10> The ink composition according to <8> or <9>, wherein the polymer having a repeating unit represented by Formula (1) further comprises a repeating unit derived from a monomer having a nitrogen atom,
<11> The ink composition according to any one of <8> to <10>, wherein the polymer having a repeating unit represented by Formula (1) has a content of 0.1 to 5 wt % relative to the total amount of the ink composition,
<12> The ink composition according to any one of <8> to <11>, which comprises a cationically polymerizable compound and/or a radically polymerizable compound as a polymerizable compound,
<13> The ink composition according to <12>, wherein the polymerizable compound comprises a compound selected from the group consisting of a monofunctional N-vinyl compound, phenoxyethyl acrylate and a cationically polymerizable cyclic ether compound,
<14> The ink composition according to any one of <8> to <13>, wherein the polymer having a repeating unit represented by Formula (1) above has a content of 30 to 80 wt % relative to the amount of pigment added,
<15> The ink composition according to any one of <8> to <14>, wherein the ink composition is an oil-based ink composition.

In accordance with the present invention, there can be provided a pigment dispersion that has excellent flowability, dispersibility, and storage stability.

And, in accordance with the present invention, there can be provided an ink composition having excellent curability, hue/saturation, hue/color density, storage stability, cured coating light fastness, and discharge reliability, and an inkjet recording method employing the ink composition.

### I. PIGMENT DISPERSION

A pigment dispersion comprising: C.I. Pigment Yellow 185; and a polymer having a repeating unit represented by Formula (1) and a repeating unit derived from a polymerizable oligomer or polymerizable polymer having an ethylenically unsaturated bond at a terminal. 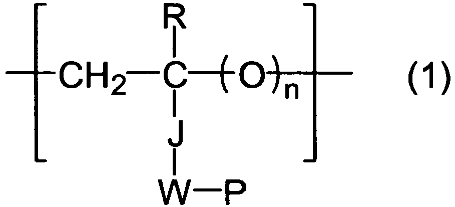 (in Formula (1), R denotes a hydrogen atom or a methyl group, J denotes -CO-, - COO-, -CONR¹-, -OCO-, a methylene group, or a phenylene group, R¹ denotes a hydrogen atom, an alkyl group, or an aryl group, n denotes 0 or 1, W denotes a single bond or a divalent linking group, and P denotes a heterocyclic residue or aromatic quinone structure-containing residue forming a basic skeleton of an organic pigment)

The pigment dispersion of the present invention is described in detail below. Description 'A to B', which indicates a numerical value range, means 'not less than A, not more B'.

### 1. C.I. Pigment Yellow 185

The pigment dispersion of the present invention comprises C.I. Pigment Yellow 185, which is an organic pigment. C.I. Pigment Yellow 185 is an isoindoline-based organic pigment and has the structure shown below.

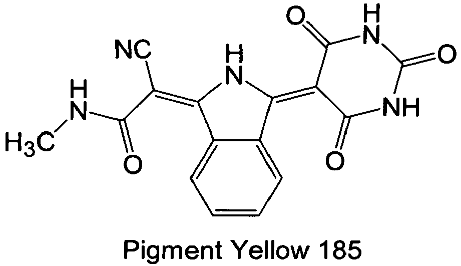

The content of the C.I. Pigment Yellow 185 is preferably 15 to 35 wt % relative to the total amount of the pigment dispersion, and more preferably 25 to 35 wt %. When in the above-mentioned range of numerical values, excellent dispersibility and ink productivity can be obtained.

In the present invention, another pigment may be used in combination; as the other pigment, known pigments may be used without limitation, but an isoindoline-based organic pigment is preferable, and an isoindoline-based yellow organic pigment is more preferable. In the present invention a pigment dispersion comprising C.I. Pigment Yellow 185 alone as a pigment is particularly preferable.

Since the finer the pigment in the pigment dispersion, the better the color generation properties, the weight-average particle size (diameter) is preferably no greater than 600 nm, more preferably less than 300 nm, and yet more preferably less than 100 nm. It is also preferably at least 5 nm.

The maximum particle size of the pigment is preferably no greater than 3 µm, and more preferably no greater than 1 µm. The particle size of the pigment may be adjusted by selection of dispersant and dispersion medium, setting of dispersing conditions and filtration conditions, etc. Furthermore, controlling the particle size of the pigment enables the flowability and storage stability of the pigment dispersion to be maintained.

The weight-average particle size and the maximum particle size of the pigment in the pigment dispersion may be measured using commercial particle size distribution analyzer (LA-920 laser diffraction/scattering type particle size distribution measurement equipment (Horiba Ltd.)), etc.

### 2. Polymer having repeating unit represented by Formula (1)

The pigment dispersion of the present invention comprises as a dispersant for the pigment a polymer having a repeating unit represented by Formula (1). 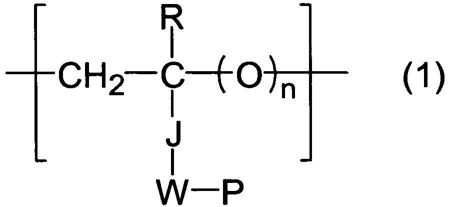 (in Formula (1), R denotes a hydrogen atom or a methyl group, J denotes -CO-, - COO-, -CONR¹-, -OCO-, a methylene group, or a phenylene group, R¹ denotes a hydrogen atom, an alkyl group, or an aryl group, n denotes 0 or 1, W denotes a single bond or a divalent linking group, and P denotes a heterocyclic residue or aromatic quinone structure-containing residue forming a basic skeleton of an organic pigment)

The inclusion of a polymer compound having a repeating unit represented by Formula (1) above enables the dispersion to be stabilized due to the effect of steric repulsion between the pigment and the polymer chain.

In Formula (1), R denotes a hydrogen atom or a methyl group.

In Formula (1), J denotes ^{*}-CO-, ^{*}-COO-, ^{*}-CONR¹-, ^{*}-OCO-, a methylene group, or a phenylene group. Among them, J is preferably ^{*}-COO-, ^{*}-CONH-, or a phenylene group. '^{*}' denotes a position of bonding to the carbon atom to which R in Formula (1) is bonded.

R¹ is preferably a hydrogen atom, an alkyl group having 1 to 10 carbon atoms, or an aryl group having 6 to 12 carbon atoms. The alkyl group and the aryl group may have a substituent, and examples of the substituent include a hydroxy group and an aryl group having 6 to 12 carbon atoms. Examples of the alkyl group include a methyl group, an ethyl group, an n-propyl group, an *i*-propyl group, an *n-*butyl group, an n-hexyl group, an n-octyl group, a 2-hydroxyethyl group, a benzyl group, and a phenylethyl group. Examples of the aryl group include a phenyl group. R¹ is preferably a hydrogen atom, a methyl group, or an ethyl group.

W denotes a single bond or a divalent linking group. Examples of the divalent linking group include a straight chain, branched, or cyclic alkylene group, an aralkylene group, an arylene group, and a combination of such a group or a combination of such groups with -NR²-, -NR²R³-, -COO-, -OCO-, -O-, -SO₂NH-, - NHSO₂-, -NHCONH-, -NHCOO-, or -OCONH-. These groups may have a substituent. Examples of the substituent include a hydroxy group.

The alkylene group denoted by W above is preferably an alkylene group having 1 to 10 carbon atoms, and more preferably an alkylene group having 1 to 4 carbon atoms. Examples thereof include a methylene group, an ethylene group, a propylene group, a butylene group, a pentylene group, a hexylene group, an octylene group, and a decylene group, and among them a methylene group, an ethylene group, a propylene group, etc. are particularly preferable.

The aralkylene group denoted by W above is preferably an aralkylene group having 7 to 13 carbon atoms, and examples thereof include a benzylidene group and a cinnamylidene group.

The arylene group denoted by W above is preferably an arylene group having 6 to 12 carbon atoms; examples thereof include a phenylene group, a cumenylene group, a mesitylene group, a tolylene group, and a xylylene group, and among them a phenylene group is particularly preferable.

R² and R³ independently denote a hydrogen atom or an alkyl group, and examples thereof include a hydrogen atom, a methyl group, an ethyl group, and a propyl group.

Among the linking groups denoted by W above, a single bond and an alkylene group are particularly preferable, and preferred specific examples thereof include a methylene group, an ethylene group, and a 2-hydroxypropylene group.

n denotes 0 or 1, and 0 is preferable.

In Formula (1), P denotes a residue forming a basic skeleton of an organic pigment, and preferably denotes a heterocyclic residue or an aromatic quinone residue. The 'residue' referred to here means a monovalent group formed by removing one hydrogen atom from a heterocyclic compound or an aromatic quinone compound.

The heterocyclic compound preferably contains as a heteroatom a nitrogen atom, an oxygen atom, or a sulfur atom, and more preferably contains a nitrogen atom. Furthermore, the heterocyclic compound is preferably a condensed ring structure having 2 or more rings, more preferably a condensed ring structure having 2 to 5 rings, and yet more preferably a condensed ring structure having 2 or 3 rings.

Rings forming the condensed ring are each preferably 4- to 7-membered rings, and more preferably 5- or 6-membered rings, and it is particularly preferable that at least one ring is an aromatic ring. The condensed ring may contain -NR- (R denotes a hydrogen atom or an alkyl group having 1 to 5 carbon atoms), a carbonyl group (-CO-), etc.

The aromatic quinone compound is preferably a condensed ring structure having 2 or more rings, more preferably a condensed ring structure having 2 to 5 rings, and yet more preferably a condensed ring structure having 2 or 3 rings. Preferred examples of the condensed ring structure having 2 or 3 rings include a naphthoquinone ring and an anthraquinone ring.

The residue forming a basic skeleton of an organic pigment that P can denote preferably has no strong absorption in the visible region, and more preferably is colorless or pale yellow. That is, P is preferably a residue having no chromophore, chromophores that are allowed being limited to -CR=N- (R denotes a hydrogen atom or a methyl group), -CO-, -C=C-, etc.

The residue forming a basic skeleton of an organic pigment is preferably a residue derived from an acridone skeleton, a quinacridone skeleton, an indole skeleton, a benzoimidazolone skeleton, a carbazole skeleton, a quinoline skeleton, an anthraquinone skeleton, a phthalimide skeleton, or a naphthalimide skeleton. These skeletons may have a substituent, and examples of the substituent include a lower alkyl group having 1 to 5 carbon atoms, a lower alkoxy group having 1 to 5 carbon atoms, and a halogen atom.

Preferred specific examples of the repeating unit represented by Formula (1) are listed below.

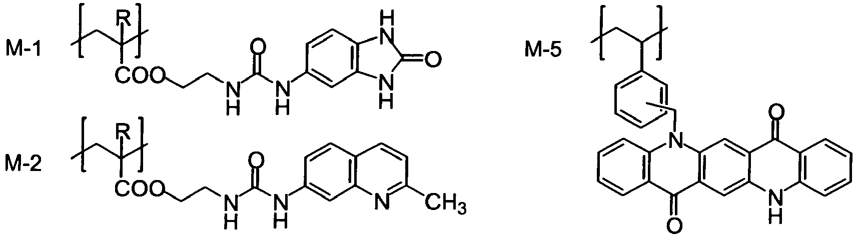

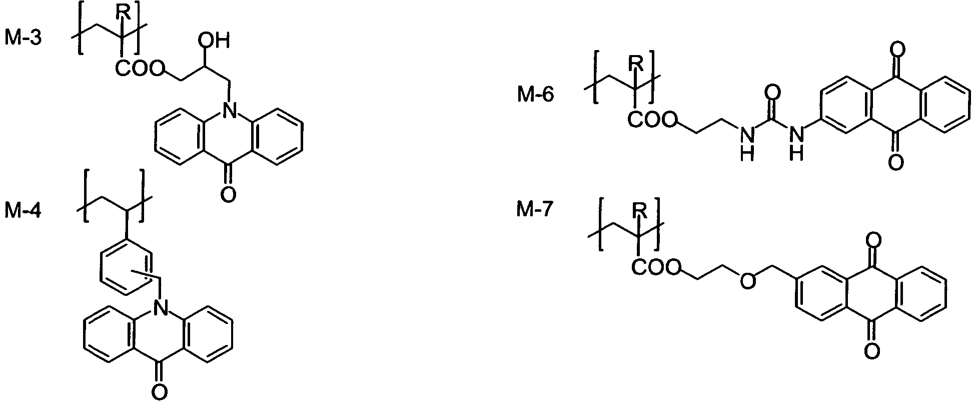

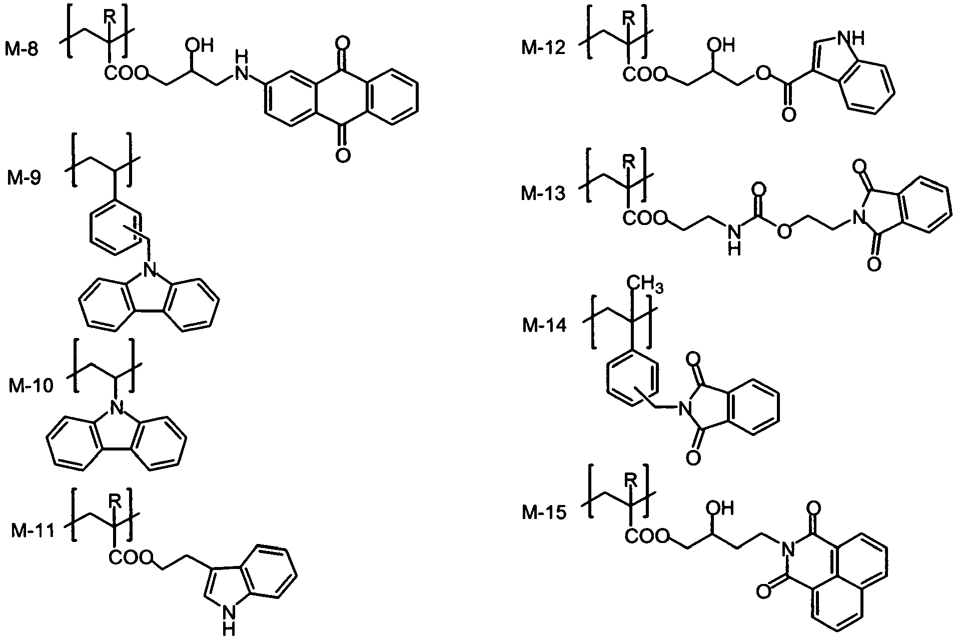

Among them, a polymer having an acridone skeleton is preferable.

The polymer having a repeating unit represented by Formula (1) has a repeating unit derived from a polymerizable oligomer or polymerizable polymer having an ethylenically unsaturated bond at a terminal (hereinafter, also called simply a 'polymerizable polymer').

The polymerizable polymer is preferably a polymerizable polymer having a polymerizable ethylenically unsaturated bond-containing functional group in a polymer chain moiety and/or at a terminal thereof. Such an ethylenically unsaturated bond-containing group is preferably present at only one terminal of a polymer chain from the viewpoint of obtaining a desired polymer.

The ethylenically unsaturated bond-containing functional group is preferably (meth)acryloyl group, or vinyl group, more preferably (meth)acryloyl group. The '(meth)acryloyl group' means 'a methacryloyl group and/or an acryloyl group', the same applies below.

The polymer chain moiety of the polymerizable polymer is generally a homopolymer or copolymer comprising at least one type of monomer selected from the group consisting of (meth)acrylate compounds having an alkyl group having 1 to 10 carbons, styrene and derivatives thereof, acrylonitrile, vinyl acetate, and butadiene. And a polyalkylene oxide such as polyethylene oxide or polypropylene oxide, and a polyester such as polycaprolactone are also preferable.

The number-average molecular weight (Mn) of the polymerizable polymer is preferably in the range of 1,000 to 10,000, and more preferably in the range of 2,000 to 9,000. It is preferable for it to be in the above-mentioned range of numerical values from the viewpoint of ease of dispersion and flowability of a dispersion and ink.

The polymerizable polymer is preferably a polymer represented by Formula (2).

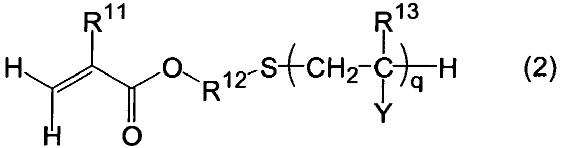

In Formula (2), R¹¹ and R¹³ independently denote a hydrogen atom or a methyl group.

R¹² denotes an alkylene group having 1 to 12 carbons, and preferably an alkylene group having 2 to 4 carbons. The alkylene group may have a substituent (e.g. a hydroxy group), and an ester bond, an ether bond, or an amide bond, etc. may be present in the chain of the alkylene group.

Y denotes a phenyl group or -COOR¹⁴. The phenyl group may have a substituent. The substituent includes alkyl group having 1 to 4 carbons (e.g. methyl group, and ethyl group). R¹⁴ denotes an alkyl group having 1 to 10 carbons which may have a subsutituent which includes aryl group having 6 to 20 carbons, or phenyl group. Examples of the alkyl group include methyl group, ethyl group, and benzyl group.

Y is preferably an unsubstituted phenyl group or -COOR¹⁴ and R¹⁴ denotes an alkyl group having 1 to 4 carbons.

q denotes 20 to 200, preferably 25 to 150, and more preferably 30 to 100.

Preferred examples of the polymerizable polymer include polymethyl (meth)acrylate, poly *n*-butyl (meth)acrylate, poly *i*-butyl (meth)acrylate, and a polymer having a (meth)acryloyl group bonded to one terminus of a polystyrene molecule.

Such polymerizable polymers that are commercially available include a single terminal methacryloylated polystyrene oligomer (Mn = 6,000, product name: AS-6, Toagosei Co., Ltd.), a single terminal methacryloylated polymethyl methacrylate oligomer (Mn = 6,000, product name: AA-6, Toagosei Co., Ltd.), a single terminal methacryloylated poly-n-butyl acrylate oligomer (Mn = 6,000, product name: AB-6, Toagosei Co., Ltd.).

The polymerizable polymer is not only a polymerizable polymer represented by Formula (2) above, but is preferably a polymerizable polymer represented by Formula (3). And it is preferably selected as appropriate according to a polymerizable compound used.

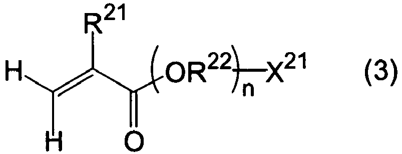

In Formula (3), R²¹ denotes a hydrogen atom or a methyl group, and R²² denotes an alkylene group having 1 to 8 carbons, X²¹ denotes -OR²³ or -OCOR²⁴, R²³ and R²⁴ independently denote a hydrogen atom, an alkyl group, or an aryl group, and n denotes 2 to 200.

R²¹ denotes a hydrogen atom or a methyl group, preferably a methyl group.

The R²²s denote an alkylene group having 1 to 8 carbons; among them an alkylene group having 1 to 6 carbons is preferable, and an alkylene group having 2 to 3 carbons is more preferable.

X²¹ denotes -OR²³ or -OCOR²⁴. R²³ is preferably a hydrogen atom, an alkyl group having 1 to 18 carbons, a phenyl group, or a phenyl group substituted with an alkyl group having 1 to 18 carbons. R²⁴ is preferably an alkyl group having 1 to 18 carbons, more preferably an alkyl group having 1 to 8 carbons.

n is 2 to 200, preferably 5 to 100, and more preferably 10 to 100.

Examples of the polymerizable polymer represented by Formula (3) include polyethylene glycol mono(meth)acrylate, polypropylene glycol mono(meth)acrylate, polyethylene glycol polypropylene glycol mono(meth)acrylate, and polytetramethylene glycol mono(meth)acrylate, and they may be commercial products or may be synthesized as appropriate.

Examples of the commercial products of the polymerizable polymer represented by Formula (3) include methoxy polyethylene glycol methacrylate (product names: NK ESTER M-40G, M-90G, and M-230G, Shin-Nakamura Chemical Co., Ltd.; product names: BLEMMER PME-100, PME-200, PME-400, PME-1000, PME-2000, and PME-4000, NOF Corporation), polyethylene glycol monomethacrylate (product names: BLEMMER PE-90, PE-200, and PE-350, NOF Corporation), polypropylene glycol monomethacrylate (product names: BLEMMER PP-500, PP-800, and PP-1000, NOF Corporation), polyethylene glycol polypropylene glycol monomethacrylate (product name: BLEMMER 70PEP-370B, NOF Corporation), polyethylene glycol polytetramethylene glycol monomethacrylate (product name: BLEMMER 55PET-800, NOF Corporation), and polypropylene glycol polytetramethylene glycol monomethacrylate (product name: BLEMMER NHK-5050, NOF Corporation).

The polymer having a repeating unit represented by Formula (1) may further comprise a repeating unit derived from a monomer having a nitrogen atom.

The monomer having a nitrogen atom is preferably a monomer represented by Formula (4).

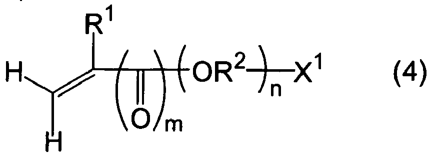

In Formula (4), R¹ denotes a hydrogen atom or a methyl group, R² denotes an alkylene group having 1 to 12 carbon atoms, X¹ denotes -N(R³)(R⁴), -R⁵-N(R⁶)(R⁷), or a basic nitrogen-containing heterocyclic group, R³, R⁴, R⁶, and R⁷ independently denote a hydrogen atom, an alkyl group having 1 to 18 carbon atoms, an aryl group having 6 to 18 carbon atoms, or a basic nitrogen-containing heterocyclic group, R⁵ denotes an alkylene group having 1 to 12 carbon atoms, and m and n independently denote 1 or 0.

R² denotes an alkylene group having 1 to 12 carbon atoms and is preferably an alkylene group having 1 to 6 carbon atoms, and particularly preferably an alkylene group having 2 or 3 carbon atoms.

X¹ is -N(R³)(R⁴), -R⁵-N(R⁶)(R⁷), or a basic nitrogen-containing heterocyclic group. R³, R⁴, R⁶, and R⁷ independently denote a hydrogen atom, an alkyl group having 1 to 18 carbon atoms, an aryl group having 6 to 18 carbon atoms, or a basic nitrogen-containing heterocyclic group. The alkyl group is preferably an alkyl group having 1 to 12 carbon atoms, and more preferably an alkyl group having 1 to 6 carbon atoms. The aryl group is preferably an aryl group having 6 to 12 carbon atoms, and more preferably an aryl group having 6 to 10 carbon atoms. R³, R⁴, R⁶, and R⁷ may have a substituent, and examples of the substituent include an amino group and a substituted amino group substituted with an alkyl group having 1 to 3 carbon atoms.

R⁵ denotes an alkylene group having 1 to 12 carbon atoms; it is preferably an alkylene group having 1 to 6 carbon atoms, and more preferably an alkylene group having 2 to 3 carbon atoms.

The basic nitrogen-containing heterocyclic group denoted by X¹ is preferably a pyridyl group (in particular, a 1-pyridyl group or a 2-pyridyl group), a piperidino group (a 1-piperidino group), a pyrrolidyl group (in particular a 2-pyrrolidyl group), a pyrrolidino group, an imidazolino group, or a morpholino group (a 4-morpholino group), and more preferably a pyridyl group or an imidazolino group.

The monomer represented by Formula (4) is particularly preferably a compound represented by any one of Formulae (4-2) to (4-4) below.

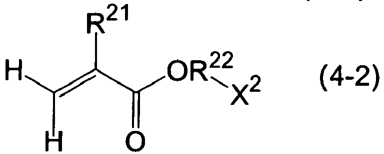

In Formula (4-2), R²¹ has the same meaning as R¹, R²² has the same meaning as R², and X² has the same meaning as X¹.

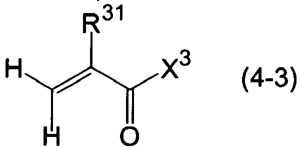

In Formula (4-3), R³¹ has the same meaning as R¹, and X³ has the same meaning as X¹. X³ is preferably -N(R³³)(R³⁴) (here, R³³ and R³⁴ have the same meaning as the corresponding R³ and R⁴), or -R³⁵-N(R³⁶)(R³⁷) (here, R³⁵, R³⁶, and R³⁷ have the same meaning as the corresponding R⁵, R⁶, and R⁷).

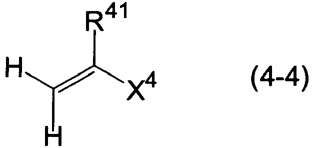

In Formula (4-4), R⁴¹ has the same meaning as R¹, and X⁴ denotes a pyrrolidino group, a pyrrolidyl group, a pyridyl group, a piperidino group, or a morpholino group.

Examples of the monomer represented by Formula (4) include N,N-dimethylaminoethyl(meth)acrylate, N,N-dimethylaminopropyl(meth)acrylate, 1-(N,N-dimethylamino)-1,1-dimethylmethyl(meth)acrylate, N,N-dimethylaminohexyl(meth)acrylate, N,N-diethylaminoethyl(meth)acrylate, N,N-diisopropylaminoethyl(meth)acrylate, N,N-di-n-butylaminoethyl(meth)acrylate, N,N-di-i-butylaminoethyl(meth)acrylate, morpholinoethyl(meth)acrylate, piperidinoethyl(meth)acrylate, 1-pyrrolidinoethyl(meth)acrylate, N,N-methyl-2-pyrrolidylaminoethyl(meth)acrylate and N,N-methylphenylaminoethyl(meth)acrylate (the monomers mentioned above are (meth)acrylates); dimethyl(meth)acrylamide, diethyl(meth)acrylamide, diisopropyl (meth)acrylamide, di-n-butyl(meth)acrylamide, di-i-butyl(meth)acrylamide, morpholino(meth)acrylamide, piperidino(meth)acrylamide, N-methyl-2-pyrrolidyl(meth)acrylamide and N,N-methylphenyl(meth)acrylamide (the monomers mentioned above are (meth)acrylamides); 2-(N,N-dimethylamino)ethyl(meth)acrylamide, 2-(N,N-diethylamino)ethyl(meth)acrylamide, 3-(N,N-diethylamino)propyl(meth)acrylamide, 3-(N,N-dimethylamino)propyl(meth)acrylamide, 1-(N,N-dimethylamino)-1,1-dimethylmethyl(meth)acrylamide and 6-(N,N-diethylamino)hexyl(meth)acrylamide (the monomers mentioned above are aminoalkyl(meth)acrylamides); p-vinylbenzyl-N,N-dimethylamine, p-vinylbenzyl-N,N-diethylamine, and p-vinylbenzyl-N,N-dihexylamine (the monomers mentioned above are vinylbenzylamines); and 2-vinylpyridine, 4-vinylpyridine, and N-vinylimidazole.

Further, the dispersant for use in the present invention may be a copolymer with other monomers copolymerizable with these polymers. Examples of the other monomers copolymerizable with these polymers may include unsaturated carboxylic acids (for example, (meth)acrylic acids, crotonic acid, itaconic acid, maleic acid and fumaric acid), aromatic vinyl compounds (for example, styrene, α-methylstyrene, vinyltoluene), alkyl(meth)acrylates (for example, methyl(meth)acrylate, ethyl(meth)acrylate, n-butyl(meth)acrylate and i-butyl(meth)acrylate), alkylaryl(meth)acrylates (for example, benzyl(meth)acrylate), substituted alkyl(meth)acrylates (for example, glycidyl(meth)acrylate and 2-hydroxyethyl(meth)acrylate), vinyl carboxylates (for example, vinyl acetate and vinyl propionate), vinyl cyanates (for example, (meth)acrylonitrile and α-chloroacrylonitrile) and aliphatic conjugate dienes (for example, 1,3-butadiene and isoprene). Among these compounds, unsaturated carboxylic acids, alkyl(meth)acrylates, alkylaryl(meth)acrylates, and vinyl carboxylates are preferable.

The dispersant used in the present invention is especially preferably a copolymer that comprises a repeating unit represented by Formula (1) and a repeating unit given from the polymerizable polymer, or a copolymer that comprises a repeating unit represented by Formula (1), a repeating unit given from the polymerizable polymer and a repeating unit given from a monomer having a nitrogen atom.

The above copolymer preferably contains the repeating unit represented by Formula (1) in a ratio 5 to 50 wt % (particularly, 5 to 30 wt %) based on all repeating units. In addition, the above copolymer preferably contains the repeating unit given from the polymerizable polymer in a ratio 30 to 80 wt % (particularly, 50 to 80 wt %) based on all repeating units. The above copolymer preferably contains the repeating unit derived from the above monomer containing nitrogen containing group in a ratio 5 to 80 wt % (particularly, 5 to 50 wt %) based on all repeating units. When the additional monomer copolymerizable with these repeating units is used, the quantity of the repeating units derived from the additional monomer is preferably in the range of 5 to 30 wt % based on the total quantity of the repeating units in the copolymer.

The weight-average molecular weight (Mw) of the copolymer is preferably in the range of 1,000 to 200,000, more preferably in the range of 10,000 to 100,000. This weight-average molecular weight is a polystyrene equivalent weight-average molecular weight determined by gel permeation chromatography (carrier: tetrahydrofuran).

Examples of the polymer suitably used as a dispersant are shown below, but the present invention should not be construed as being limited thereto.
(1) Monomer giving M-1 above/single-terminal (meth)acryloylated polymethyl (meth)acrylate (10: 90 ratio by weight) copolymer
(2) Monomer giving M-1 above/polyethylene glycol mono(meth)acrylate (15: 85 ratio by weight) copolymer
(3) Monomer giving M-1 above/terminal (meth)acryloylated polycaprolactone (20: 80 ratio by weight) copolymer
(4) Monomer giving M-4 above/single-terminal (meth)acryloylated polymethyl (meth)acrylate (10: 90 ratio by weight) copolymer
(5) Monomer giving M-4 above/polyethylene glycol mono(meth)acrylate (20: 80 ratio by weight) copolymer
(6) Monomer giving M-4 above/terminal (meth)acryloylated polycaprolactone (25: 75 ratio by weight) copolymer
(7) Monomer giving M-4 above/3-(N,N-dimethylamino)propyl (meth)acrylamide/single-terminal (meth)acryloylated polymethyl (meth)acrylate (10: 20: 70 ratio by weight) copolymer
(8) Monomer giving M-4 above/3-(N,N-dimethylamino)propyl (meth)acrylamide/polyethylene glycol mono(meth)acrylate (15: 25: 60 ratio by weight) copolymer
(9) Monomer giving M-4 above/3-(N,N-dimethylamino)propyl (meth)acrylamide/single-terminal (meth)acryloylated polymethyl (meth)acrylate/polyethylene glycol mono(meth)acrylate (8: 22: 50: 20 ratio by weight) copolymer
(10) Monomer giving M-4 above/2-(N,N-dimethylamino)ethyl (meth)acrylate/single-terminal (meth)acryloylated polymethyl (meth)acrylate (8: 42: 50 ratio by weight) copolymer
(11) Monomer giving M-4 above/2-vinylpyridine/single-terminal (meth)acryloylated polymethyl (meth)acrylate (20: 30: 50 ratio by weight) copolymer
(12) Monomer giving M-4 above/p-vinylbenzyl-N,N-dimethylamine/polyethylene glycol mono(meth)acrylate (7: 43: 50 ratio by weight) copolymer
(13) Monomer giving M-4 above/2-(N,N-dimethylamino)ethyl (meth)acrylate/single-terminal (meth)acryloylated polyn-butyl (meth)acrylate (10: 10: 80 ratio by weight) copolymer
(14) Monomer giving M-4 above/stylene/single-terminal (meth)acryloylated polymethyl (meth)acrylate (15: 15: 70 ratio by weight) copolymer
(15) Monomer giving M-4 above/N,N-dimethyl (meth)acrylamide/single-terminal (meth)acryloylated polymethyl (meth)acrylate (20: 10: 70 ratio by weight) copolymer
(16) Monomer giving M-6 above/3-(N,N-dimethylamino)propyl (meth)acrylamide/single-terminal (meth)acryloylated polymethyl (meth)acrylate (10: 40: 50 ratio by weight) copolymer
(17) Monomer giving M-6 above/3-(N,N-dimethylamino)propyl (meth)acrylamide/polyethylene glycol mono(meth)acrylate (15: 15: 70 ratio by weight) copolymer
(18) Monomer giving M-6 above/3-(N,N-dimethylamino)propyl (meth)acrylamide/single-terminal (meth)acryloylated polymethyl (meth)acrylate (10: 20: 70 ratio by weight) copolymer
(19) Monomer giving M-13 above/2-(N,N-dimethylamino)ethyl (meth)acrylate/single-terminal (meth)acryloylated polymethyl (meth)acrylate (25: 25: 50 ratio by weight) copolymer
(20) Monomer giving M-13 above/4-vinylpyridine/single-terminal (meth)acryloylated polymethyl (meth)acrylate (5: 25: 70 ratio by weight) copolymer
(21) Monomer giving M-13 above/2-(N,N-dimethylamino)ethyl (meth)acrylate/polyethylene glycol mono(meth)acrylate (10: 30: 60 ratio by weight) copolymer
(22) Monomer giving M-14 above/2-(N,N-dimethylamino)ethyl (meth)acrylate/single-terminal (meth)acryloylated polymethyl (meth)acrylate (15: 25: 60 ratio by weight) copolymer

Such copolymers can be obtained by radical polymerization, in a solvent, of the polymerizable polymer and, optionally, the monomer having a nitrogen atom and/or other additional monomers. In this polymerization, preferably a radical polymerization initiator is used. In addition to the initiator, a chain transfer agent (e.g., 2-mercaptoethanol and dodecyl mercaptan) may be further added.

When carrying out dispersion of a pigment, in addition to the polymer having a repeating unit represented by Formula (1), another dispersant may be added in a range that does not impair the effects of the Invention.

Examples of the other dispersant include hydroxy group-containing carboxylic acid esters, salts of a long-chain polyaminoamide and a high molecular weight acid ester, high molecular weight polycarboxylic acid salts, high molecular weight unsaturated acid esters, high molecular weight copolymers, modified polyacrylates, aliphatic polycarboxylic acids, naphthalenesulfonic acid formaldehyde condensates, polyoxyethylene alkylphosphate esters, and pigment derivatives. It is also preferable to use a commercial polymeric dispersant such as the Solsperse series manufactured by Lubrizol.

The pigment dispersion of the present invention may comprise only one type of polymer having a repeating unit represented by Formula (1) as a dispersant or two or more types thereof in combination. The amount of the above dispersant used is preferably 1 to 100 wt % relative to the amount of pigment added, more preferably 20 to 90 wt %, and yet more preferably 30 to 80 wt %. It is preferable for it to be in the above-mentioned range of numerical values from the viewpoint of ease of dispersion, flowability, and storage stability.

Furthermore, the content of the dispersant, with the total pigment dispersion as 100 wt %, is preferably 1 to 15 wt %, more preferably 2 to 12 wt %, and yet more preferably 5 to 10 wt %. It is preferable for it to be in the above-mentioned range of numerical values since dispersibility and stability of a fine pigment improve, a pigment dispersion having excellent flowability is obtained, and vivid color tone and high coloring power improve greatly.

### 3. Dispersion medium

The pigment dispersion of the present invention is obtained by dispersing C.I. Pigment Yellow 185, which is an isoindoline-based organic pigment, and a polymer having a repeating unit represented by Formula (1) in any dispersion medium.

For dispersion, for example, dispersing equipment such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, a wet type jet mill, or a bead mill may suitably be used. Among them, it is preferable to use a media dispersing machine using balls and beads, etc. and more preferable to use a bead mill dispersing machine.

The pigment dispersion preferably comprises a polymerizable compound as the dispersion medium. The polymerizable compound is preferably a compound that can undergo a polymerization upon exposure to actinic radiation, and it may be any of a monomer, an oligomer, and a polymer. Among them, various types of known polymerizable monomers known as photopolymerizable monomers, in which a polymerization reaction is caused by a polymerization initiating species generated from a polymerization initiator are more preferable. The polymerizable compound may be a monofunctional compound or a polyfunctional compound.

The polymerizable compound is preferably a cationically polymerizable compound and/or a radically polymerizable compound, and more preferably either a cationically polymerizable compound or a radically polymerizable compound. When the pigment dispersion of the present invention is used as a pigment master batch to be added to the ink composition, if the ink composition is cationically polymerizable, the polymerizable compound that is added to the pigment dispersion as a dispersion medium is preferably a cationically polymerizable monomer as well. On the other hand, if the ink composition is radically polymerizable, the polymerizable compound that is added to the pigment dispersion is preferably a radically polymerizable monomer as well. These polymerizable compounds are described later.

An organic solvent, etc. may be used as a dispersion medium instead of a polymerizable compound, but the pigment dispersion of the present invention preferably does not contain an organic solvent and is free of solvent. This is because, when the pigment dispersion of the present invention is used by adding it to an ink composition, if solvent remains in a cured ink image, the solvent resistance might be degraded, or a VOC (Volatile Organic Compound) problem due to the remaining solvent might occur. Because of this, it is preferable to use a polymerizable compound as the dispersion medium and, in terms of dispersion suitability and ease of handling being improved, to select among polymerizable compounds a polymerizable compound having low viscosity.

The content of polymerizable compound used as a dispersion medium in the pigment dispersion is preferably 40 to 90 wt % relative to the total weight of the pigment dispersion, and more preferably 50 to 85 wt %. When in the above-mentioned range of numerical values, a pigment dispersion having excellent flowability, dispersibility, and storage stability is obtained.

### II. INK COMPOSITION

An ink composition of the present invention comprises the above-captioned pigment dispersion and thus, comprises C.I. Pigment Yellow 185 and a polymer having a repeating unit represented by Formula (1) and a repeating unit derived from a polymerizable oligomer or polymerizable polymer having an ethylenically unsaturated bond at a terminal. The ink composition preferably comprises a polymerizable compound and polymerization initiator.

Since the ink composition of the present invention has excellent pigment dispensability and storage stability, clogging of inkjet nozzles can be suppressed for a long period of time, and the ink composition can be used preferably as an inkjet recording ink.

The ink composition of the present invention is preferably one produced by a dispersion step of preparing the pigment dispersion of the present invention and a dilution step of diluting the pigment dispersion thus obtained in a dilution composition containing a photopolymerization initiator (called also simply an 'initiator') and a polymerizable compound. In the dispersion step, a component that is to be added to the ink composition may be added to the pigment dispersion as necessary, and following this the dilution step may be carried out.

The content of the C.I. Pigment Yellow 185 is preferably 1 to 15 wt % relative to the total amount of the ink composition, and more preferably 5 to 12 wt %. When in the above-mentioned range of numerical values, excellent color reproduction and stable ink dischargeability can be obtained.

Since the finer the pigment in the ink composition, the better the color generation properties, the weight-average particle size (diameter) is preferably no greater than 600 nm, more preferably less than 300 nm, and yet more preferably less than 100 nm. It is also preferably at least 5 nm.

The maximum particle size of the pigment is preferably no greater than 3 µm, and more preferably no greater than 1 µm. The particle size of the pigment may be adjusted by selection of pigment, dispersant and dispersion medium, setting of dispersing conditions and filtration conditions, etc. Furthermore, controlling the particle size of the pigment enables the stable ink dischargeability, storage stability, and hue to be maintained.

The weight-average particle size of the pigment in the ink composition may be measured using commercial particle size distribution analyzer (LA-920 laser diffraction/scattering type particle size distribution measurement equipment (Horiba Ltd.)), etc.

The content of the polymer having a repeating unit represented by Formula (1), with the total ink composition as 100 wt %, is preferably 0.1 to 5 wt %, more preferably 1.0 to 4.0 wt %, and yet more preferably 1.5 to 3.5 wt %. It is preferable for it to be in the above-mentioned range since excellent color reproductivity and stable ink dischargeability can be obtained.

In the present invention, the ratio by weight of the polymer having a repeating unit represented by Formula (1) above relative to C.I. Pigment Yellow 185 is the same as the ratio by weight in the pigment dispersion of the present invention, and a preferred range is also the same.

The ink composition of the present invention is preferably an oil-based ink composition. 'Oil-based' means that the ink is not miscible with water.

In the present invention, from the view of dischargeability, the ink composition preferably has a viscosity at 25°C of no more than 40 mPa·s, more preferably 5 to 40 mPa·s, yet more preferably 7 to 30 mPa·s.

Furthermore, the viscosity of the ink composition at the discharge temperature (e.g. 25 to 80°C, and preferably 25 to 50°C) is preferably 3 to 20 mPa·s, and more preferably 3 to 15 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, uncured monomer can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and yet more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

The ink composition of the present invention is preferably an ink composition that is curable upon exposure to actinic radiation. The 'actinic radiation' referred to in the present invention is not particularly limited as long as it is actinic radiation that can provide energy that enables an initiating species to be generated in the ink composition when irradiated, and broadly includes α rays, γ rays, X rays, ultra-violet rays (UV rays), visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

The ink composition of the present invention may be made into a cationically polymerizable ink composition or a radically polymerizable ink composition by selecting the polymerizable compound and polymerization initiator added. By the use of a radically polymerizable compound and a cationically polymerizable compound in combination, a hybrid type ink composition can be made, but in the present invention either cationically polymerizable or radically polymerizable is preferable, and from the viewpoint of curing sensitivity a cationically polymerizable ink composition is preferable. The components of a cationically polymerizable ink composition and a radically polymerizable ink composition are explained below.

### III. Cationically polymerizable ink composition

### 1. Cationically polymerizable compound

A cationically polymerizable compound that is preferably used when the ink composition of the present invention is a cationically polymerizable ink composition is explained below.

As the cationically polymerizable compound, a cyclic ether compound and/or a vinyl ether compound are preferably used, and a cyclic ether compound is more preferable.

As the cyclic ether compound which can be used in the present invention, from the viewpoint of curability and abrasion resistance, an oxetane-ring containing compound and an oxirane ring-containing compound are preferable, and a configuration in which both of an oxetane-ring containing compound and an oxirane ring-containing compound are contained is more preferable.

The oxirane ring-containing compound (hereinafter, also called an 'oxirane compound' as appropriate) is a compound containing at least one oxirane ring (oxiranyl group, epoxy group) per molecule; it may be appropriately selected from those normally used as epoxy resins. And specific examples thereof include conventionally known aromatic epoxy resins, alicyclic epoxy resins, and aliphatic epoxy resins. It may be any one of a monomer, an oligomer, and a polymer. Furthermore, the oxetane-ring containing compound (hereinafter, also called an 'oxetane compound' as appropriate) is a compound containing at least one oxetane ring (oxetanyl group) per molecule.

Examples of monofunctional epoxy compounds include phenyl glycidyl ether, *p*-*tert*-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexenylmethyl-3',4'-epoxycyclohexenecarboxylate, 2-(3,4-epoxycyclohexyl)-7,8-epoxy-1,3-dioxaspiro[5.5]undecane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexenyl 3',4'-epoxy-6'-methylcyclohexenecarboxylate, methylenebis(3,4-epoxycyclohexane), dicyclopentadiene diepoxide, di(3,4-epoxycyclohexylmethyl) ether of ethylene glycol, ethylene bis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

The oxetane compound may be selected freely from known oxetane compounds such as those described in JP-A-2001-220526, JP-A-2001-310937, and JP-A-2003-341217.

The oxetane compound is preferably a compound having 1 to 4 oxetane rings in its structure. Use of such a compound enables the viscosity of the ink composition for inkjet recording to be maintained in a range that gives ease of handling and enables high adhesion of the ink composition to a recording medium after curing to be obtained.

Examples of monofunctional oxetane compounds include 3-ethyl-3-hydroxymethyloxetane, 3-allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl] phenyl ether, isobutoxymethyl (3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, ethyl diethylene glycol (3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, and bornyl (3-ethyl-3-oxetanylmethyl) ether.

Examples of polyfunctional oxetane compounds include 3,3'-oxybismethylenebis(3-ethyloxetane), 3,7-bis(3-oxetanyl)-5-oxanonane, 3,3'-(1,3-(2-methylenyl)propanediylbis(oxymethylene))bis-(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl) ether, dicyclopentenylbis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene (3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, ethylene oxide (EO)-modified bisphenol A bis(3-ethyl-3-oxetanylmethyl) ether, propylene oxide (PO)-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

Such oxetane compounds are described in detail in Paragraph Nos. 0021 to 0084 of JP-A-2003-341217, and compounds described therein can be used suitably in the present invention.

Among the oxetane compounds used in the present invention, from the viewpoint of viscosity and tackiness of the ink composition for the inkjet recording, it is preferable to use a compound having 1 to 2 oxetane rings. The cyclic ether compound may be used singly or in a combination of two or more types.

The vinyl ether compound is not particularly limited as long as it is a compound that cures by undergoing a cationic polymerization reaction by the application of any energy; any type of monomer, oligomer, or polymer may be used and, in particular, various types of known cationically polymerizable monomers, known as cationically photopolymerizable monomers, which undergo a polymerization reaction by means of an initiating species generated from a photo-acid generator may be used. Furthermore, the vinyl ether polymerizable compound may be a monofunctional compound or a polyfunctional compound.

The content of the cationically polymerizable compound, relative to the total amount of the ink composition, is preferably 60 to 95 wt %, more preferably 70 to 90 wt %, and yet more preferably 75 to 85 wt %. It is preferable for it to be in the above range since excellent curability is obtained.

### 2. Cationic polymerization initiator

In the ink composition of the present invention, a photo-acid generator can be used as a cationic polymerization initiator. Examples of the photo-acid generator that can be used in the present invention include, firstly, B(C₆F₅)₄⁻, PF₆⁻, AsF₆⁻, SbF₆⁻, and CF₃SO₃⁻ salts of aromatic onium compounds such as diazonium, ammonium, iodonium, sulfonium, phosphonium. Secondly, sulfonated materials that generate a sulfonic acid can be cited. Thirdly, halides that photogenerate a hydrogen halide can also be used. Fourthly, iron arene complexes can be cited.

Preferred specific examples of the cationic polymerization initiator that can be used in the present invention include compounds (b-1) to (b-96) described in JP-A-2007-224149, oxazole derivatives and s-triazine derivatives described in Paragraph Nos. 0029 to 0030 of JP-A-2002-122994, and onium salt compounds and sulfonate-based compounds cited as examples in Paragraph Nos. 0037 to 0063 of JP-A-2002-122994. The photo-acid generator may be used singly or in a combination of two or more types.

The content of the photo-acid generator in the ink composition is preferably 0.1 to 20 wt % on the basis of the total solids content of the ink composition, more preferably 0.5 to 10 wt %, yet more preferably 1 to 7 wt %.

### 3. Sensitizer

The cationically polymerizable ink composition of the present invention may comprise a sensitizer.

Examples of the sensitizer include those in the categories of compounds below and have an adsorption wavelength in the region of 350 nm to 450 nm.

Examples thereof include polynuclear aromatic compounds (e.g. pyrene, perylene, triphenylene, 9,10-dimethoxyanthracene, 2-ethyl-9,10-dimethoxyanthracene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavine, acriflavine), anthraquinones (e.g. anthraquinone), squaryliums (e.g. squarylium), and coumarins (e.g. 7-diethylamino-4-methylcoumarin).

Preferred examples of the sensitizer that can be used in the present invention include compounds represented by Formulae (i) to (vi) below.

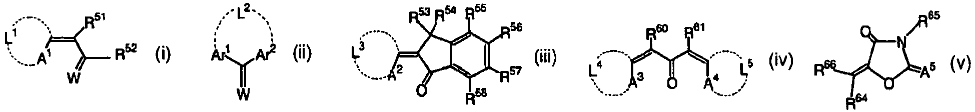

In Formula (i), A¹ denotes a sulfur atom or NR⁵⁰, and R⁵⁰ denotes a substituted or unsubstituted alkyl group or an aryl group. L¹ denotes a non-metallic atomic group forming a basic nucleus of a dye in cooperation with the adjacent A¹ and adjacent carbon atom. R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

In Formula (ii), Ar¹ and Ar² independently denote an aryl group and are connected to each other via bonding with L². Here, L² denotes -O- or -S-. W has the same meaning as that shown in Formula (i).

In Formula (iii), A² denotes a sulfur atom or NR⁵⁹, and R⁵⁹ denotes a substituted or unsubstituted alkyl group or an aryl group. L³ denotes a non-metallic atomic group forming a basic nucleus of a dye in cooperation with the adjacent A² and carbon atom. R⁵³, R⁵⁴, R⁵⁵, R⁵⁶, R⁵⁷, and R⁵⁸ independently denote a monovalent non-metallic atomic group.

In Formula (iv), A³ and A⁴ independently denote -S-, -NR⁶²-, or -NR⁶³-, and R⁶² and R⁶³ independently denote a substituted or unsubstituted alkyl group or a substituted or unsubstituted aryl group. L⁴ and L⁵ independently denote a non-metallic atomic group forming a basic nucleus of a dye in cooperation with the adjacent A³, A⁴, and adjacent carbon atom. R⁶⁰ and R⁶¹ independently denote a hydrogen atom or a monovalent non-metallic atomic group. R⁶⁰ and R⁶¹ may be bonded to each other to form an aliphatic or aromatic ring.

In Formula (v), R⁶⁶ denotes an aromatic ring or a hetero ring, which may have a substituent. A⁵ denotes an oxygen atom, a sulfur atom, or -NR⁶⁷-. R⁶⁴, R⁶⁵, and R⁶⁷ independently denote a hydrogen atom or a monovalent non-metallic atomic group. R⁶⁷ and R⁶⁴, and R⁶⁵ and R⁶⁷ may be bonded to each other to form an aliphatic or aromatic ring.

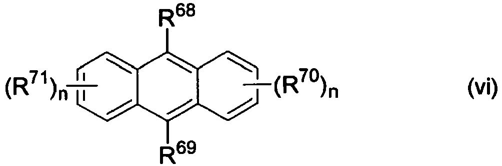

In Formula (vi), R⁶⁸ and R⁶⁹ independently denote a hydrogen atom or a monovalent non-metallic atomic group. R⁷⁰ and R⁷¹ independently denote a hydrogen atom or a monovalent non-metallic atomic group, and n denotes an integer of 0 to 4. When n is 2 or greater, R⁷⁰ and R⁷¹ may be bonded to each other to form an aliphatic or aromatic ring.

Preferred examples of the compounds represented by Formulae (i) to (vi) include (C-1) to (C-26) below, but are not limited thereto.

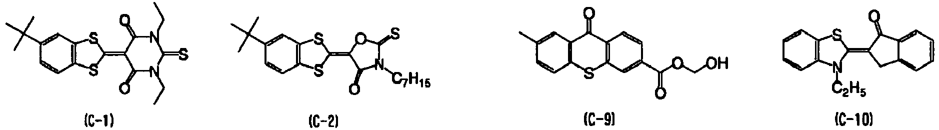

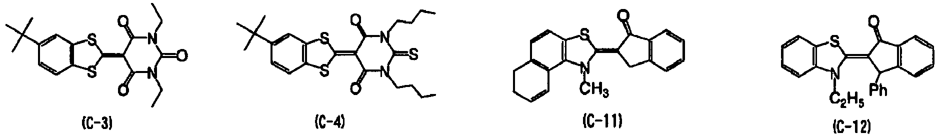

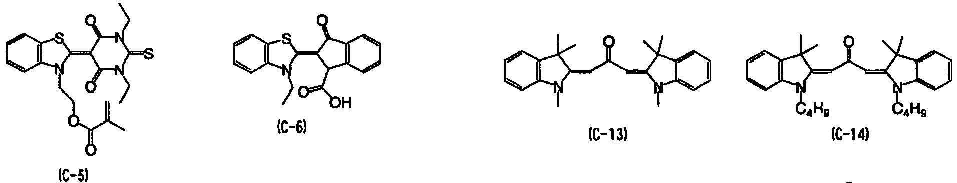

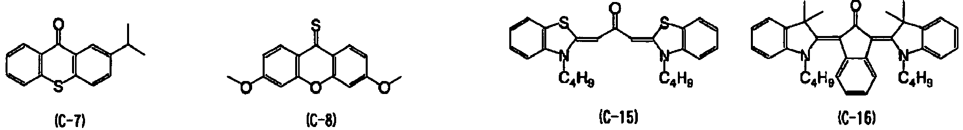

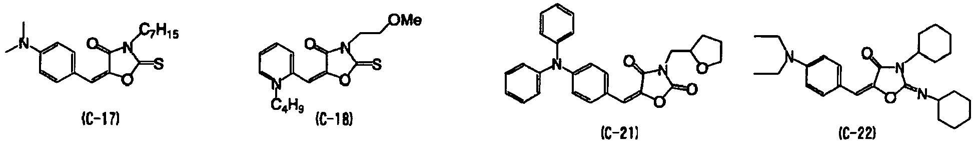

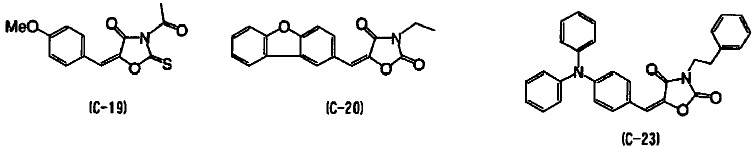

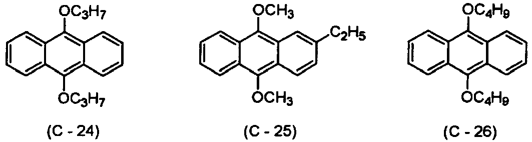

From the viewpoint of the coloring properties of the ink, the content of the sensitizer used in the ink composition of the present invention is preferably 0.01 to 20 wt % relative to the entire solids content of the ink composition, more preferably 0.1 to 15 wt %, and yet more preferably 0.5 to 10 wt %.

The sensitizer may be used singly or in a combination of two or more types.

Furthermore, from the viewpoint of improvement of decomposition efficiency of the polymerization initiator and transparency to irradiating light, the ratio of the polymerization initiator to the sensitizer contained in the ink composition is preferably polymerization initiator/sensitizer = 100 to 0.05 as a ratio by weight, more preferably polymerization initiator/sensitizer = 50 to 0.1, and yet more preferably polymerization initiator/sensitizer = 10 to 0.5.

### 4. Other additives

The pigment dispersion of the present invention and the ink composition of the present invention may comprise, in addition to the above-mentioned components, various types of additives according to the intended purpose.

For example, a UV absorber may be used from the viewpoint of improving the weatherability. Furthermore, in order to improve the storage stability, an antioxidant may be added.

Moreover, it is possible to add various types of organic and metal complex antifading agents, a conductive salt such as potassium thiocyanate, lithium nitrate, ammonium thiocyanate, or dimethylamine hydrochloride for the purpose of controlling discharge physical properties, or a trace amount of an organic solvent in order to improve the adhesion to a substrate.

Furthermore, various types of high molecular weight compounds may be added in order to adjust coating physical properties. Examples of the high molecular weight compounds include acrylic polymers, polyvinylbutyral resins, polyurethane resins, polyamide resins, polyester resins, epoxy resins, phenolic resins, polycarbonate resins, polyvinylbutyral resins, polyvinylformal resins, shellac, vinylic resins, acrylic resins, rubber-based resins, waxes, and other natural resins. They may be used in a combination of two or more types.

It is preferable to add a polymerization inhibitor. The polymerization inhibitors that can be used in the present invention are not limited, and known polymerization inhibitors and known basic compounds can be used.

In addition to the above, the ink composition may contain as necessary, for example, a leveling additive, a matting agent, a wax for adjusting film physical properties, or a tackifier in order to improve the adhesion to a recording medium such as polyolefin or polyethylene terephthalate (PET), the tackifier not inhibiting polymerization.

### IV. Radically polymerizable ink composition

A radically polymerizable compound, a polymerization initiator, etc. that are preferably used when the ink composition of the present invention is a radically polymerizable ink composition are explained below.

### 1. Radically polymerizable compound

The radically polymerizable compound is preferably an ethylenically unsaturated compound that undergoes polymerization by irradiation with actinic radiation; it may be either a monofunctional polymerizable monomer or a polyfunctional polymerizable monomer but, in the present invention, is preferably used in a configuration in which a polyfunctional polymerizable monomer and a monofunctional polymerizable monomer are used in combination.

As a radically polymerizable polyfunctional polymerizable monomer, a monomer having two or more ethylenically unsaturated double bond groups selected from the group consisting of an acryloyloxy group, a methacryloyloxy group, an acrylamide group, a methacrylamide group, a vinyloxy group, and an *N*-vinyl group is preferably used. By containing a polyfunctional polymerizable monomer, an ink composition having a high cured coating strength is obtained.

Examples of polyfunctional polymerizable monomer include unsaturated carboxylic acids such as acrylic acid, methacrylic acid, itaconic acid, crotonic acid, isocrotonic acid, and maleic acid, and salts thereof, anhydrides having an ethylenically unsaturated group, acrylonitrile, styrene, and various types of unsaturated polyesters, unsaturated polyethers, unsaturated polyamides, and (meth)acrylic acid esters of unsaturated urethane (meth)acrylic monomers or prepolymers, epoxy monomers or prepolymers, or urethane monomers or prepolymers, which are compounds having two or more ethylenically unsaturated double bonds.

Specific examples thereof include (meth)acrylic acid derivatives such as neopentyl glycol di(meth)acrylate, (poly)ethylene glycol di(meth)acrylate, (poly)propylene glycol di(meth)acrylate, (poly)tetramethylene glycol di(meth)acrylate, ethoxylated neopentyl glycol di(meth)acrylate, propoxylated neopentyl glycol di(meth)acrylate, bisphenol A EO adduct di(meth)acrylate, bisphenol A PO adduct di(meth)acrylate, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, caprolactone-modified dipentaerythritol hexa(meth)acrylate, EO-modified trimethylolpropane tri(meth)acrylate, PO-modified trimethylolpropane tri(meth)acrylate, EO-modified tetramethylolmethane tetra(meth)acrylate, PO-modified tetramethylolmethane tetra(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tetra(meth)acrylate, tetramethylolmethane tri(meth)acrylate, trimethylolethane tri(meth)acrylate, trimethylolpropane tri(meth)acrylate, 2,2-bis(4-(meth)acryloxypolyethoxyphenyl)propane, 1,6-hexanediol di(meth)acrylate, 1,9-nonanediol di(meth)acrylate, 1,10-decanediol di(meth)acrylate, hydroxypivalic acid neopentyl glycol di(meth)acrylate, tetramethylolmethane tri(meth)acrylate, dimethyloltricyclodecane di(meth)acrylate, modified glycerol tri(meth)acrylate, bisphenol A diglycidyl ether (meth)acrylic acid adduct, modified bisphenol A di(meth)acrylate, dipentaerythritol hexa(meth)acrylate, pentaerythritol tri(meth)acrylate tolylene diisocyanate urethane prepolymer, pentaerythritol tri(meth)acrylate hexamethylene diisocyanate urethane prepolymer, ditrimethylolpropane tetra(meth)acrylate, and pentaerythritol tri(meth)acrylate hexamethylene diisocyanate urethane prepolymer; allyl compound derivatives such as diallyl phthalate and triallyl trimellitate and, more specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku (Genryo)' (UV·EB Curing Handbook (Starting Materials)) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988).

Among the (meth)acrylic acid derivatives above, from the viewpoint of excellent curability, acrylic acid derivatives are preferable. And polyfunctional polimerizable monomers which do not have a ring structure such as an aromatic ring and an aliphatic ring are preferable.

The ink composition of the present invention preferably comprises, in addition to the polyfunctional polymerizable monomer, a monofunctional radically polymerizable monomer selected from the group consisting of a monofunctional (meth)acrylate, a monofunctional vinyloxy compound, a monofunctional *N*-vinyl compound, and a monofunctional (meth)acrylamide.

As the monofunctional radically polymerizable monomer, it is preferable to use a monomer having a cyclic structure and only one ethylenically unsaturated bond group selected from the group consisting of a (meth)acryloyloxy group, a (meth)acrylamide group, and an *N*-vinyl group.

As the radically polymerizable monomer suitably used in the present invention, ethylenically unsaturated compounds represented by Formula (A) below can be cited.

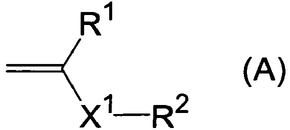

In Formula (A) above, R¹ denotes a hydrogen atom or a methyl group.

X¹ denotes a first divalent linking group in which (-C(O)O-) or (-C(O)NH-) is bonded to the ethylenically unsaturated bond shown in Formula (A), the first divalent linking group may be bonded to a second divalent linking group that is a single bond, an ether bond (-O-), an ester bond (-C(O)O- or OC(O)-), an amide bond (-C(O)NH-or -NHC(O)-), a carbonyl bond (-C(O)-), an optionally branched alkylene group having no greater than 20 carbons, or a combination thereof, and it is preferable for X¹ to be the first divalent linking group alone or one having an ether bond, an ester bond, and/or an alkylene group having no greater than 20 carbons when it has the second divalent linking group.

R² is a group having at least one cyclic structure, and denotes an aromatic group such as a monocyclic aromatic group or a polycyclic aromatic group, or an alicyclic hydrocarbon group having a cycloalkane skeleton, an adamantane skeleton, or a norbornane skeleton. The aromatic group and the alicyclic hydrocarbon group may comprise a heteroatom such as O, N, or S in the cyclic structure.

In Formula (A), the aromatic group denoted by R² is preferably a phenyl group, which is a monocyclic aromatic group, or a polycyclic aromatic group having 2 to 4 rings, but is not limited thereto, and specific examples thereof include a naphthyl group, an anthryl group, a 1H-indenyl group, a 9H-fluorenyl group, a 1H-phenalenyl group, a phenanthrenyl group, a triphenylenyl group, a pyrenyl group, a naphthacenyl group, a tetraphenylenyl group, a biphenylenyl group, an as-indacenyl group, an s-indacenyl group, an acenaphthylenyl group, a fluoranthenyl group, an acephenanthrenyl group, an aceanthrenyl group, a chrysenyl group, and a pleiadenyl group. In the present invention, the phenyl group is preferable.

These aromatic groups may be aromatic heterocyclic groups containing a heteroatom such as O, N, or S. These aromatic groups may have one or more halogen atoms, hydroxy groups, amino groups, thiol groups, siloxane groups, or substituents having no greater than 30 carbons. The aromatic group may form a cyclic structure containing a heteroatom such as O, N, or S from two or more substituents thereof as in, for example, phthalic anhydride or phthalimide anhydride.

Furthermore, R² of Formula (A) may be an alicyclic hydrocarbon group. Moreover, it may be an alicyclic hydrocarbon group containing a heteroatom such as O, N, or S.

The alicyclic hydrocarbon group may be a group having a cycloalkane with 3 to 12 carbons.

Specific examples of the alicyclic hydrocarbon group containing a heteroatom such as O, N, or S include a pyrrolidinyl group, a pyrazolidinyl group, an imidazolidinyl group, an isooxazolidinyl group, an isothiazolidinyl group, a piperidinyl group, a piperazinyl group, a morpholinyl group, and a thiomorpholinyl group.

These alicyclic hydrocarbon and heteromonocycle-containing alicyclic hydrocarbon groups may have one or more substituents, and examples of the substituent include a halogen atom, a hydroxy group, an amino group, a thiol group, a siloxane group, and an optionally substituted hydrocarbon group having a total of no greater than 30 carbons. It may have an oxy group (= O) as a divalent substituent, and two or more substituents of the alicyclic hydrocarbon group may form a heterocyclic structure containing a heteroatom such as O, N, or S.

Preferred examples of the monofunctional radically polymerizable monomer that can be used in the present invention include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-*t*-butylcyclohexyl (meth)acrylate, (meth)acryloylmorpholine, 2-benzyl (meth)acrylate, phenoxyethyl (meth)acrylate, phenoxydiethylene glycol (meth)acrylate, phenoxytriethylene glycol (meth)acrylate, ethylene oxide-modified cresol (meth)acrylate (hereinafter, 'ethylene oxide' is also called 'EO'), tetrahydrofurfuryl (meth)acrylate, caprolactone-modified tetrahydrofurfuryl acrylate, nonylphenoxy polyethylene glycol (meth)acrylate, neopentyl glycol benzoate (meth)acrylate, paracumylphenoxyethylene glycol (meth)acrylate, *N*-phthalimidoethyl (meth)acrylate, pentamethylpiperidyl (meth)acrylate, tetramethylpiperidyl (meth)acrylate, *N*-cyclohexyl (meth)acrylamide, *N*-(1,1-dimethyl-2-phenyl)ethyl (meth)acrylamide, *N*-diphenylmethyl (meth)acrylamide, *N*-phthalimidomethyl (meth)acrylamide, *N*-(1,1'-dimethyl-3-(1,2,4-triazol-1-yl))propyl (meth)acrylamide, and 5-(meth)acryloyloxymethyl-5-ethyl-1,3-dioxacyclohexane.

The total amount of polymerizable compound in the ink composition of the present invention is preferably 55 to 95 wt % relative to the total weight of the ink composition, and more preferably 60 to 90 wt %. It is preferable for it to be in the above-mentioned range since curability is excellent and viscosity is appropriate.

### 2. Polymerization initiator

The ink composition of the present invention preferably comprises a polymerization initiator, and more preferably comprises an acylphosphine oxide compound and/or an α-aminoacetophenone compound as polymerization initiators. Furthermore, the ink composition of the present invention preferably comprises 2 or more types of polymerization initiators, more preferably comprises 3 to 5 types of photopolymerization initiators. Moreover, the ink composition of the present invention preferably comprises 2 or more types of acylphosphine oxide compounds, more preferably comprises 2 to 4 types of acylphosphine oxide compounds, and yet more preferably comprises 2 types of acylphosphine oxide compounds. Furthermore, in the present invention, it is preferable that at least one type of acylphosphine oxide compound and at least one type of α-aminoacetophenone compound are used in combination as polymerization initiators. Use of these photopolymerization initiators enables curability inside a coating to be enhanced.

The acylphosphine oxide compound is preferably a compound represented by Formula (2) or Formula (3).

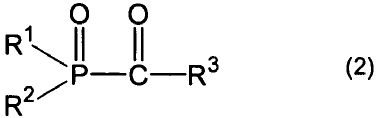

R¹ and R² in Formula (2) above independently denote an aliphatic group, an aromatic group, an aliphatic oxy group, an aromatic oxy group, or a heterocyclic group, and R³ denotes an aliphatic group, an aromatic group, or a heterocyclic group. R¹ and R² above may be bonded to form a 5-membered to 9-membered ring. The ring structure may be a heterocycle having in the ring structure an oxygen atom, a nitrogen atom, a sulfur atom, etc.

Examples of the aliphatic group represented by R¹, R², or R³ above include an alkyl group, a substituted alkyl group, an alkenyl group, a substituted alkenyl group, an alkynyl group, a substituted alkynyl group; among them, an alkyl group, a substituted alkyl group, an alkenyl group, a substituted alkenyl group are preferable, and an alkyl group and a substituted alkyl group are particularly preferable. Furthermore, the aliphatic group may be a cyclic aliphatic group or an open-chain aliphatic group. The open-chain aliphatic group may be branched.

Examples of the alkyl group include straight chain, branched, and cyclic alkyl groups, and the number of carbons in the alkyl group is preferably at least 1 but no greater than 30, and more preferably at least 1 but no greater than 20. A preferred range for the number of carbons in the alkyl moiety of the substituted alkyl group is the same as for the alkyl group above. Examples of the alkyl group include a methyl group, an ethyl group, a propyl group, a butyl group, a pentyl group, a hexyl group, an octyl group, a 2-ethylhexyl group, a decyl group, a dodecyl group, an octadecyl group, a cyclohexyl group, a cyclopentyl group, a neopentyl group, an isopropyl group, and an isobutyl group.

Examples of the substituent of the substituted alkyl group include -COOH (carboxy group), -SO₃H (sulfo group), -CN (cyano group), a halogen atom (e.g. a fluorine atom, a chlorine atom, a bromine atom), -OH (hydroxy group), an alkoxycarbonyl group having no greater than 30 carbons (e.g. a methoxycarbonyl group, an ethoxycarbonyl group, a benzyloxycarbonyl group), an alkylsulfonylaminocarbonyl group having no greater than 30 carbons, an arylsulfonylaminocarbonyl group having no greater than 30 carbons, an alkylsulfonyl group having no greater than 30 carbons, an arylsulfonyl group having no greater than 30 carbons, an acylaminosulfonyl group having no greater than 30 carbons, an alkoxy group having no greater than 30 carbons (e.g. a methoxy group, an ethoxy group, a benzyloxy group, a phenoxyethoxy group, a phenethyloxy group), an alkylthio group having no greater than 30 carbons (e.g. a methylthio group, an ethylthio group, a methylthioethylthioethyl group), an aryloxy group having no greater than 30 carbons (e.g. a phenoxy group, a p-tolyloxy group, a 1-naphthoxy group, a 2-naphthoxy group), a nitro group, an alkoxycarbonyloxy group having no greater than 30 carbons , an aryloxycarbonyloxy group having no greater than 30 carbons , an acyloxy group having no greater than 30 carbons (e.g. an acetyloxy group, a propionyloxy group), an acyl group having no greater than 30 carbons (e.g. an acetyl group, a propionyl group, a benzoyl group), a carbamoyl group (e.g. a carbamoyl group, an *N,N*-dimethylcarbamoyl group, a morpholinocarbonyl group, a piperidinocarbonyl group), a sulfamoyl group (e.g. a sulfamoyl group, an *N,N*-dimethylsulfamoyl group, a morpholinosulfonyl group, a piperidinosulfonyl group), an aryl group having no greater than 30 carbons (e.g. a phenyl group, a 4-chlorophenyl group, a 4-methylphenyl group, an α-naphthyl group), a substituted amino group (e.g. an amino group, an alkylamino group, a dialkylamino group, an arylamino group, a diarylamino group, an acylamino group), a substituted ureido group having no greater than 30 carbons, a substituted phosphono group having no greater than 30 carbons, and a heterocyclic group having no greater than 30 carbons. Here, the carboxy group, the sulfo group, the hydroxy group, and the phosphono group may be in the form of a salt. In this case, a cation forming the salt is a group that can form a positive ion, and is preferably an organic cationic compound, a transition metal coordination complex cation (a compound described in Japanese registered patent No. 2791143, etc.), or a metal cation (e.g. Na⁺, K⁺, Li⁺, Ag⁺, Fe²⁺, Fe³⁺, Cu⁺, Cu²⁺, Zn²⁺, Al³⁺).

Examples of the alkenyl group include straight chain, branched, and cyclic alkenyl groups, and the number of carbons of the alkenyl group is preferably at least 2 but no greater than 30, and more preferably at least 2 but no greater than 20. Furthermore, the alkenyl group may be an unsubstituted alkenyl group or a substituted alkenyl group having a substituent, and a preferred range for the number of carbons in the alkenyl moiety of the substituted alkenyl group is the same as for the alkenyl group above. Examples of the substituent of the substituted alkenyl group include the same substituents as for the above substituted alkyl group.

Examples of the alkynyl group include straight chain, branched, and cyclic alkynyl groups, and the number of carbons of the alkynyl group is preferably at least 2 but no greater than 30, and more preferably at least 2 but no greater than 20. Furthermore, the alkynyl group may be an unsubstituted alkynyl group or a substituted alkynyl group having a substituent, and a preferred range for the number of carbons in the alkynyl moiety of the substituted alkynyl group is the same as for the alkynyl group above. Examples of the substituent of the substituted alkynyl group include the same substituents as for the above substituted alkyl group.

Examples of the aromatic group represented by R¹, R², or R³ include an aryl group and a substituted aryl group. The number of carbons of the aryl group is preferably at least 6 but no greater than 30, and more preferably at least 6 but no greater than 20. A preferred range for the number of carbons in the aryl moiety of the substituted aryl group is the same as for the aryl group above. Examples of the aryl group include a phenyl group, an α-naphthyl group, and a β-naphthyl group. Examples of the substituent of the substituted aryl group include the same substituents as for the above substituted alkyl group, and straight chain, branched, and cyclic alkyl groups having no greater than 30 carbons.

The aliphatic oxy group represented by R¹ or R² above is preferably an alkoxy group having at least 1 but no greater than 30 carbons, and examples thereof include a methoxy group, an ethoxy group, a butoxy group, an octyloxy group, and a phenoxyethoxy group. However, the examples are not limited thereto.

The aromatic oxy group represented by R¹ or R² above is preferably an aryloxy group having at least 6 but no greater than 30 carbons, and examples thereof include a phenoxy group, a methylphenyloxy group, a chlorophenyloxy group, a methoxyphenyloxy group, and an octyloxyphenyloxy group. However, the examples are not limited thereto.

The heterocyclic group represented by R¹, R², or R³ above is preferably an N, O, or S atom-containing heterocyclic group, and examples thereof include a pyridyl group, a furyl group, a thienyl group, an imidazolyl group, and a pyrrolyl group.

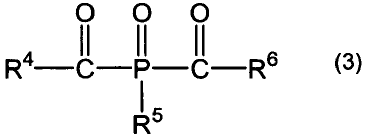

R⁴ and R⁶ in Formula (3) above independently denote an alkyl group, an aryl group, or a heterocyclic group, and R⁵ denotes an alkyl group, an aryl group, an alkoxy group, an aryloxy group, or a heterocyclic group.

The alkyl group, aryl group, heterocyclic group, alkoxy group, and aryloxy group denoted by R⁴, R⁵, or R⁶ may have a substituent, and examples of the substituent include the same substituents as in the case of Formula (2) above.

The alkyl group, aryl group, heterocyclic group, alkoxy group, and aryloxy group in Formula (3) above are the same as those in Formula (2) above.

The compound represented by Formula (2) above is preferably a compound represented by Formula (4) below.

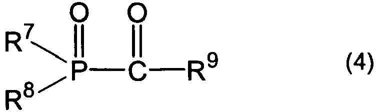

In Formula (4), R⁷ and R⁸ independently denote a phenyl group, a methoxy group, or an isopropoxy group, and R⁹ denotes a 2,4,6-trimethylphenyl group, a 2,4-dimethylphenyl group, a 2-methylphenyl group (o-toluyl group), an isobutyl group, or a *t*-butyl group.

The compound represented by Formula (3) above is preferably a compound represented by Formula (5) below.

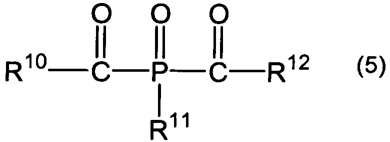

In Formula (5), R¹⁰ and R¹² independently denote a 2,4,6-trimethylphenyl group, a 2,6-dimethylphenyl group, or a 2,6-dimethoxyphenyl group, and R¹¹ denotes a phenyl group or a 2,4,4-trimethylpentyl group.

Examples of the acylphosphine oxide compound represented by Formula (2) or Formula (3) above include compounds described in JP-B-63-40799 (JP-B denotes a Japanese examined patent application publication), JP-B-5-29234, JP-A-10-95788, JP-A-10-29997, etc.

As the acylphosphine oxide compound, a monoacylphosphine oxide compound, a bisacylphosphine oxide compound, etc. may be used, and as the monoacylphosphine oxide compound a known monoacylphosphine oxide compound may be used. Examples thereof include monoacylphosphine oxide compounds described in JP-B-60-8047 and JP-B-63-40799.

Specific examples thereof include 2,4,6-trimethylbenzoyldiphenylphosphine oxide, methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl p-toluylphenylphosphinate, methyl *o-*toluylphenylphosphinate, methyl 2,4-dimethylbenzoylphenylphosphinate, isopropyl p-tert-butylbenzoylphenylphosphinate, methyl acryloylphenylphosphinate, isobutyryldiphenylphosphine oxide, 2-ethylhexanoyldiphenylphosphine oxide, *o-*toluyldiphenylphosphine oxide, *p*-*tert*-butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoylbis(diphenylphosphine oxide), pivaloyldiphenylphosphine oxide, *p-*toluyldiphenylphosphine oxide, 4-(*tert*-butyl)benzoyldiphenylphosphine oxide, 2-methylbenzoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound a known bisacylphosphine oxide compound may be used. Examples thereof include bisacylphosphine oxide compounds described in JP-A-3-101686, JP-A-5-345790, and JP-A-6-298818. Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphenylphosphine oxide.

Among them, as the acylphosphine oxide compound in the present invention, bis(2,4,6-trimethylbenzoyl)phenylphosphine oxide (IRGACURE 819: manufactured by Ciba Specialty Chemicals), bis(2,6-dimethoxybenzoyl)-2,4,4-trimethylpentylphenylphosphine oxide, 2,4,6-trimethylbenzoyldiphenylphosphine oxide (DAROCUR TPO: manufactured by Ciba Specialty Chemicals, LUCIRIN TPO: manufactured by BASF), etc. are preferable.

One type of α-aminoacetophenone compound may be used on its own or two or more types thereof may be used.

As the α-aminoacetophenone compound, a compound represented by Formula (1) below may preferably be used.

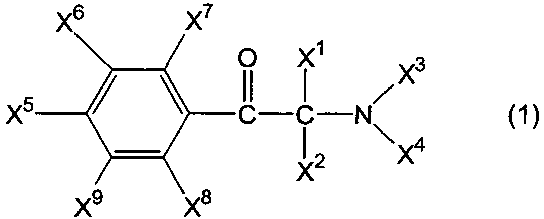

In the formula, X¹ denotes a group represented by (a), (b), or (c) below.

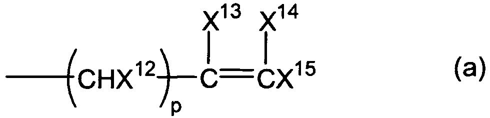

In the formula, p is 0 or 1.

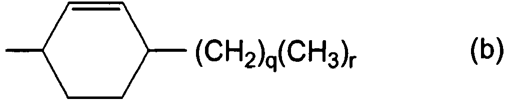

In the formula, q is an integer of 0 to 3 and r is 0 or 1.

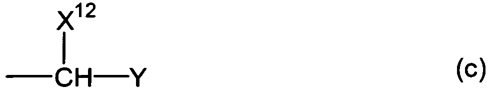

In the formula, Y denotes a hydrogen atom, a halogen atom, an OH group, an alkyl group having at least 1 but no greater than 12 carbons (unless otherwise specified, the alkyl group means a straight chain or branched alkyl group, the same applies below), an alkoxy group having at least 1 but no greater than 12 carbons, an aromatic group, or a heterocyclic group.

Preferred examples of the aromatic group include a phenyl group and a naphthyl group.

Preferred examples of the heterocyclic group include a furyl group, a thienyl group, and a pyridyl group.

The alkyl group, alkoxy group, aromatic group, and heterocyclic group denoted by Y may have a substituent.

Examples of the substituent that the alkyl group denoted by Y may have include an OH group, a halogen atom, -N(X¹⁰)₂ (X¹⁰ denotes a hydrogen atom, an alkyl group having at least 1 but no greater than 8 carbons, an alkenyl group having at least 3 but no greater than 5 carbons, a phenylalkyl group having at least 7 but no greater than 9 carbons, a hydroxyalkyl group having at least 1 but no greater than 4 carbons, or a phenyl group, and the two X¹⁰s may be identical to or different from each other), an alkoxy group having at least 1 but no greater than 12 carbons, -COOR (R denotes an alkyl group having at least 1 but no greater than 18 carbons), -CO(OCH₂OCH₂)ₙOCH₃ (n denotes an integer of at least 1 but no greater than 20), and -OCOR (R denotes an alkyl group having at least 1 but no greater than 4 carbons).

Examples of the substituent that the alkoxy group denoted by Y may have include -COOR (R denotes an alkyl group having at least 1 but no greater than 18 carbons) and -CO(OCH₂CH₂)ₙOCH₃ (n denotes an integer of at least 1 but no greater than 20).

Examples of the substituent that the aromatic group or heterocyclic group denoted by Y may have include -(OCH₂CH₂)ₙOH (n denotes an integer of at least 1 but no greater than 20), -(OCH₂CH₂)ₙOCH₃ (n denotes an integer of at least 1 but no greater than 20), an alkylthio group having at least 1 but no greater than 8 carbons, a phenoxy group, -COOR (R denotes an alkyl group having at least 1 but no greater than 18 carbons), -CO(OCH₂CH₂)ₙOCH₃ (n denotes an integer of at least 1 but no greater than 20), a phenyl group, and a benzyl group.

Two or more such substituents may be present if this is possible, and the substituent may further be substituted if this is possible.

Furthermore, in the formula, X¹² denotes a hydrogen atom, an alkyl group having at least 1 but no greater than 8 carbons, or a phenyl group. X¹³, X¹⁴, and X¹⁵ independently denote a hydrogen atom or an alkyl group having at least 1 but no greater than 4 carbons. X¹³ and X¹⁴ may be bridged to form an alkylene group having at least 3 but no greater than 7 carbons.

In the formula, X² denotes a group represented by (a), (b), or (c), a cycloalkyl group having 5 or 6 carbons, an alkyl group having at least 1 but no greater than 12 carbons, or a phenyl group.

The alkyl group and phenyl group denoted by X² may have a substituent.

Examples of the substituent that the alkyl group denoted by X² may have include an alkoxy group having at least 1 but no greater than 4 carbons, a phenoxy group, a halogen atom, and a phenyl group.

Examples of the substituent that the phenyl group denoted by X² may have include a halogen atom, an alkyl group having at least 1 but no greater than 12 carbons, and an alkoxy group having at least 1 but no greater than 4 carbons.

Two or more such substituents may be present if this is possible, and the substituent may further be substituted if this is possible.

Furthermore, in the formula, X¹ and X² may be bridged to form a group represented by the formulae below. m denotes an integer of 1 or 2.

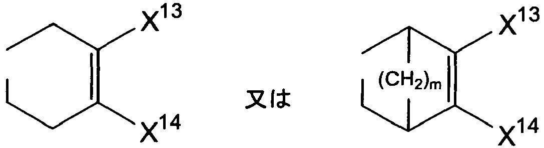

In the formula, X³ denotes a hydrogen atom, an alkyl group having at least 1 but no greater than 12 carbons, an alkenyl group having at least 3 but no greater than 5 carbons, a cycloalkyl group having at least 5 but no greater than 12 carbons, or a phenylalkyl group having at least 7 but no greater than 9 carbons.

The alkyl group, alkenyl group, cycloalkyl group, and phenylalkyl group denoted by X³ may have a substituent, and examples of the substituent include an OH group, an alkoxy group having at least 1 but no greater than 4 carbons, -CN, and -COOR (R denotes an alkyl group having at least 1 but no greater than 4 carbons).

In the formula, X⁴ denotes an alkyl group having at least 1 but no greater than 12 carbons, an alkenyl group having at least 3 but no greater than 5 carbons, a cycloalkyl group having at least 5 but no greater than 12 carbons, a phenylalkyl group having at least 7 but no greater than 9 carbons, or a phenyl group.

The alkyl group, alkenyl group, cycloalkyl group, phenylalkyl group, and phenyl group denoted by X⁴ may have a substituent.

Examples of the substituent that the alkyl group, alkenyl group, cycloalkyl group, and phenylalkyl group denoted by X⁴ may have include an OH group, an alkoxy group having at least 1 but no greater than 4 carbons, -CN, and -COOR (R denotes an alkyl group having at least 1 but no greater than 4 carbons). When the alkyl group denoted by X⁴ has a substituent, the number of carbons in the alkyl group that is substituted is preferably at least 2 but no greater than 4.

Examples of the substituent that the phenyl group denoted by X⁴ may have include a halogen atom, an alkyl group having at least 1 but no greater than 12 carbons, an alkoxy group having at least 1 but no greater than 4 carbons, and - COOR (R denotes an alkyl group having at least 1 but no greater than 4 carbons).

Here, X² and X⁴ may be bridged to form an alkylene group having at least 1 but no greater than 7 carbons, a phenylalkylene group having at least 7 but no greater than 10 carbons, an o-xylylene group, a 2-butenylene group, or an oxa- or aza-alkylene group having 2 or 3 carbons.

Furthermore, X³ and X⁴ may be bridged to form an alkylene group having at least 3 but no greater than 7 carbons.

The alkylene group formed by bridging X³ and X⁴ may have as a substituent an OH group, an alkoxy group having at least 1 but no greater than 4 carbons, or - COOR (R denotes alkyl having at least 1 but no greater than 4 carbons), or may contain in a bond -O-, -S-, -CO-, or -N(X¹⁶)- (X¹⁶ denotes a hydrogen atom, an alkyl group having at least 1 but no greater than 12 carbons, or an alkyl group having at least 1 but no greater than 12 carbons and containing in a bonding chain one or more -O-, an alkenyl group having at least 3 but no greater than 5 carbons, a phenylalkyl group having at least 7 but no greater than 9 carbons, a hydroxyalkyl group having at least 1 but no greater than 4 carbons, -CH₂CH₂CN, -CH₂CH₂COOR (R denotes an alkyl group having at least 1 but no greater than 4 carbons), an alkanoyl group having at least 2 but no greater than 8 carbons, or an alkyl group having at least 2 but no greater than 12 carbons and containing in a bonding chain benzoyl group).

In the formula, X⁵, X⁶, X⁷, X⁸, and X⁹ independently denote a hydrogen atom, a halogen atom, an alkyl group having at least 1 but no greater than 12 carbons, a cycloalkyl group having 5 or 6 carbons, a phenyl group, a benzyl group, a benzoyl group, an -OX¹⁷ group, an -SX¹⁸ group, an -SO-X¹⁸ group, an -SO₂-X¹⁸ group, an -N(X¹⁹)(X²⁰) group, an -NH-SO₂-X²¹ group, or a group represented by the formula below.

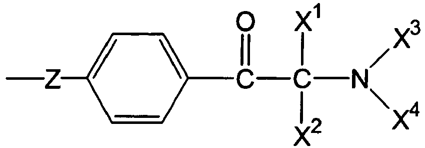

In the formula, Z denotes -O-, -S-, -N(X¹⁰)-X¹¹-N(X¹⁰)-, or a group represented by the formula below. X¹, X², X³, and X⁴ have the same meanings as defined for Formula (1).

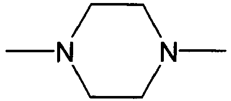

In the formula, X¹⁰ is the same as described above, and X¹¹ denotes a straight chain or branched alkylene group having at least 2 but no greater than 16 carbons, or a straight chain or branched alkylene group having at least 2 but no greater than 16 carbons in which at least one -O-, -S-, or -N(X¹⁰)- is present in the chain (X¹⁰ is the same as above).

X¹⁷ denotes a hydrogen atom, an alkyl group having at least 1 but no greater than 12 carbons, -(CH₂CH₂O)ₙH (n is an integer of at least 2 but no greater than 20), an alkanoyl group having at least 2 but no greater than 8 carbons, an alkenyl group having at least 3 but no greater than 12 carbons, a cyclohexyl group, a hydroxycyclohexyl group, a phenyl group, a phenylalkyl group having at least 7 but no greater than 9 carbons, or -Si(R⁴)ᵣ(R⁵₎₃₋ᵣ (R⁴ is an alkyl group having at least 1 but no greater than 8 carbons, R⁵ is a phenyl group, and r is 1, 2, or 3).

The alkyl group and phenyl group denoted by X¹⁷ may have a substituent.

Examples of the substituent that the alkyl group denoted by X¹⁷ may have include -CN, -OH, an alkoxy group having at least 1 but no greater than 4 carbons, an alkenyloxy group having at least 3 but no greater than 6 carbons, -OCH₂CH₂CN, -CH₂CH₂COOR (R denotes an alkyl group having at least 1 but no greater than 4 carbons), -COOH, or -COOR (R denotes an alkyl group having at least 1 but no greater than 4 carbons). Furthermore, when the alkyl group denoted by X¹⁷ has a substituent, the number of carbons of the alkyl group that is substituted is preferably at least 1 but no greater than 6.

Examples of the substituent that the phenyl group denoted by X¹⁷ may have include a halogen atom, an alkyl group having at least 1 but no greater than 12 carbons, or an alkoxy group having at least 1 but no greater than 4 carbons.

X¹⁸ denotes a hydrogen atom, an alkyl group having at least 1 but no greater than 12 carbons, an alkenyl group having at least 3 but no greater than 12 carbons, a cyclohexyl group, a phenyl group, or a phenylalkyl group having at least 7 but no greater than 9 carbons.

The alkyl group and phenyl group denoted by X¹⁸ may have a substituent.

Examples of the substituent that the alkyl group denoted by X¹⁸ may have include -SH, -OH, -CN, -COOR (R denotes an alkyl group having at least 1 but no greater than 4 carbons), an alkoxy group having at least 1 but no greater than 4 carbons, -OCH₂CH₂CN, or -OCH₂CH₂COOR (R denotes alkyl having at least 1 but no greater than 4 carbons).

Examples of the substituent that the phenyl group denoted by X¹⁸ may have include a halogen atom, an alkyl group having at least 1 but no greater than 12 carbons, or an alkoxy group having at least 1 but no greater than 4 carbons.

X¹⁹ and X²⁰ independently denote a hydrogen atom; an alkyl group having at least 1 but no greater than 12 carbons; a hydroxyalkyl group having at least 2 but no greater than 4 carbons; an alkoxyalkyl group having at least 2 but no greater than 10 carbons; an alkenyl group having at least 3 but no greater than 5 carbons; a cycloalkyl group having at least 5 but no greater than 12 carbons; a phenylalkyl group having at least 7 but no greater than 9 carbons; a phenyl group; a phenyl group substituted with a halogen atom, an alkyl group having at least 1 but no greater than 12 carbons, or an alkoxy group having at least 1 but no greater than 4 carbons; an alkanoyl group having 2 or 3 carbons; or a benzoyl group. Furthermore, X¹⁹ and X²⁰ may be bridged to form an alkylene group having at least 2 but no greater than 8 carbons, an alkylene group having at least 2 but no greater than 8 carbons that is substituted with an OH group, an alkoxy group having at least 1 but no greater than 4 carbons, or a -COOR (R is alkyl group having at least 1 but no greater than 4 carbons); or an alkylene group having at least 2 but no greater than 8 carbons that contains in the bonding chain -O-, -S-, or -N(X¹⁶)- (X¹⁶ is the same as above).

X²¹ denotes an alkyl group having at least 1 but no greater than 18 carbons; a phenyl group; a naphthyl group; or a phenyl group or naphthyl group substituted with a halogen atom, an alkyl group having at least 1 but no greater than 12 carbons, or an alkoxy group having at least 1 but no greater than 8 carbons.

Formula (1) is preferably represented by Formula (d), 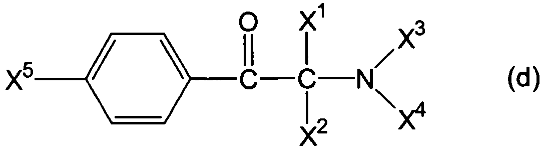 in Formula (d), X¹ and X² independently denote a methyl group, an ethyl group, or a benzyl group, -NX³X⁴ denotes a dimethylamino group, a diethylamino group, or a morpholino group, and X⁵ denotes a hydrogen atom, an alkyl group having at least 1 but no greater than 8 carbons, an alkoxy group having at least 1 but no greater than 8 carbons, an alkylthio group having at least 1 but no greater than 8 carbons, a dimethylamino group, or a morpholino group. Among them, it is more preferable that -NX³X⁴ is a dimethylamino group or a morpholino group.

Furthermore, as the α-aminoacetophenone compound, an acid adduct salt of the compound represented by Formula (1) above may be used.

Moreover, examples of commercial α-aminoacetophenone compounds include polymerization initiators available under the product names IRGACURE 907, IRGACURE 369, and IRGACURE 379 from Ciba Specialty Chemicals, and they may be used suitably.

Specific examples of the α-aminoacetophenone compound include the compounds below.

That is, there are 2-dimethylamino-2-methyl-1-phenylpropan-1-one, 2-diethylamino-2-methyl-1-phenylpropan-1-one, 2-methyl-2-morpholino-1-phenylpropan-1-one, 2-dimethylamino-2-methyl-1-(4-methylphenyl)propan-1-one, 2-dimethy)amino-1-(4-ethylpheny)-2-methylpropan-1-one, 2-dimethylamino-1-(4-isopropylphenyl)-2-methylpropan-1-one, 1-(4-butylphenyl)-2-dimethylamino-2-methylpropan-1-one, 2-dimethylamino-1-(4-methoxyphenyl)-2-methylpropan-1-one, 2-dimethylamino-2-methyl-1-(4-methylthiophenyl)propan-1-one, 2-methyl-1-(4-methylthiophenyl)-2-morpholinopropan-1-one (IRGACURE 907), 2-benzyl-2-dimethylamino-1-(4-morpholinophenyl)butan-1-one (IRGACURE 369), 2-benzyl-2-dimethylamino-1-(4-dimethylaminophenyl)butan-1-one, and 2-dimethylamino-2-[(4-methylphenyl)methyl]-1-[4-(4-morpholinyl)phenyl]-1-butanone (IRGACURE 379).

The ink composition of the present invention may comprise an other photopolymerization initiator. The polymerization initiator preferably comprises a radical polymerization initiator.

A photopolymerization initiator known to a person skilled in the art may be used without limitation, and many specific examples thereof are described in Bruce M. Monroe et al., Chemical Reviews, 93, 435 (1993), R. S. Davidson, Journal of Photochemistry and Biology A: Chemistry, 73, 81 (1993), J. P. Faussier "Photoinitiated Polymerization-Theory and Applications": Rapra Review, Vol.9, Report, Rapra Technology (1998), and M. Tsunooka et al., Prog. Polym. Sci., 21, 1 (1996). Furthermore, many compounds utilized in chemically amplified photoresists and cationic photopolymerization, etc. are described in 'Imejingu yo Yukizairyou' (Organic Materials for Imaging) Ed. Japanese Research Association for Organic Electronics Materials, Bunshin Publishing Co. (1993), pp. 187-192. Moreover, a group of compounds are known, as described in F. D. Saeva, Topics in Current Chemistry, 156, 59 (1990), G. G. Maslak, Topics in Current Chemistry, 168, 1 (1993), H. B. Shuster et al., JACS, 112, 6329 (1990), I. D. F. Eaton et al., JACS, 102, 3298 (1980), etc., that cause oxidative or reductive bond cleavage via interaction with an electronic excited state of a sensitizing dye.

### V. INKJET RECORDING METHOD

The inkjet recording method of the present invention is a method for forming an image by discharging an ink composition onto a recording medium (e.g. support, recording material) for inkjet recording and curing the ink by irradiating the ink composition so discharged onto the recording medium with actinic radiation.

The ink composition comprises C.I. Pigment Yellow 185; and a polymer having a repeating unit represented by Formula (1): 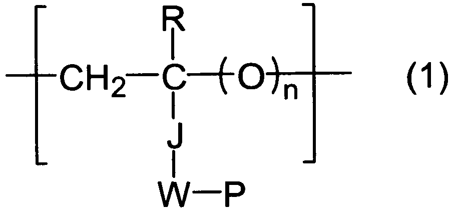 wherein R denotes a hydrogen atom or a methyl group, J denotes -CO-, - COO-, -CONR1-, -OCO-, a methylene group, or a phenylene group, R1 denotes a hydrogen atom, an alkyl group, or an aryl group, n denotes 0 or 1, W denotes a single bond or a divalent linking group, and P denotes a heterocyclic residue or aromatic quinone structure-containing residue forming a basic skeleton of an organic pigment.

More specifically, the inkjet recording method of the present invention comprises (a¹) a step of discharging the ink composition of the present invention onto a recording medium and (b¹) a step of curing the ink composition by irradiating the discharged ink composition with actinic radiation.

The inkjet recording method of the present invention comprises the above steps (a¹) and (b¹), and thus forms an image from the ink composition cured on the recording medium.

The printed material of the present invention is a printed material recorded by the inkjet recording method of the present invention.

The inkjet recording method of the present invention may employ an inkjet recording device that will be described in detail below.

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in step (a¹) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000 dpi, more preferably 400 x 400 to 1,600 x 1,600 dpi, and yet more preferably 720 x 720 dpi. Here, dpi referred to in the present invention means the number of dots per 2.54 cm.

In the inkjet recording method of the present invention employing the ink composition of the present invention, an amount of the ink droplet per pixel is preferably 2 to 10 pL, and the maximum amount of the ink composition is preferably in the range of greater than 2.2 mg/cm² to less than 8.8 mg/cm². More preferable maximum amount of the ink composition is at least 3.3 mg/cm² to no greater than 7.7 mg/cm².

Since it is desirable for the ink composition of the present invention to be discharged at a constant temperature, the inkjet recording device is preferably equipped with a temperature stabilizer for stabilizing the temperature of the ink composition. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The ink composition is preferably discharged using the above mentioned inkjet recording device after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of not more than 50 mPa·s since a good discharge stability can be obtained. By employing this method, high discharge stability can be realized.

The actinic radiation curing type ink composition for inkjet recording such as the ink composition of the present invention generally has a viscosity that is higher than that of a water-based ink composition used for an inkjet recording ink, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of the ink composition is preferably ±5°C of a set temperature, more preferably ±2°C of the set temperature, and yet more preferably ±1 °C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a cation, an acid, a base, and a radical being generated by decomposition of the polymerization initiator contained in the ink composition of the present invention by irradiation with actinic radiation, the initiating species functioning so as to make a polymerization reaction of a polymerizable compound take place and to promote it. In this process, if a sensitizer is present together with the polymerization initiator in the ink composition, the sensitizer in the system absorbs radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is, for example, preferably 200 to 600 nm, more preferably 300 to 450 nm, and yet more preferably 320 to 420 nm, and it is paticularly preferable that the actinic radiation is UV rays having the peak wavelength of 340 to 400 nm.

Furthermore, the polymerization initiation system of the ink composition of the present invention has sufficient sensitivity for low output actinic radiation. The actinic radiation is applied therefore so that the illumination intensity on the exposed surface is preferably 10 to 4,000 mW/cm², and more preferably 20 to 2,500 mW/cm².

As an actinic radiation source, a mercury lamp, a gas/solid laser, etc. are mainly used, and for UV photocuring type ink composition for inkjet recording a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another UV-LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (e.g. preferably 0.01 to 5 sec., more preferably 0.01 to 3 sec., and yet more preferably 0.01 to 15 sec.) has elapsed from when the ink has landed. By controlling the time from ink composition landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing the above-mentioned inkjet recording method, it is possible to keep the diameter of landed ink composition dots constant even for various recording media having different surface wettability, thus improving the image quality. In order to obtain a color image, it is preferable to superimpose in order from low lightness colors. By superimposing in order from low lightness inks, it becomes easy for radiation to reach ink in a lower part, and good curing sensitivity, reduction of residual monomer, and improvement in adhesion can be expected. In terms of irradiation, although it is possible to discharge all the colors and expose them together, it is preferable in terms of promoting curing that exposure is carried out for each color.

In this way, the ink composition of the present invention cures with high sensitivity upon exposure to actinic radiation, thereby forming an image on the surface of a recording medium.

In the inkjet recording method of the present invention, it is preferable to use the ink composition of the present invention as a yellow ink composition.

The ink composition of the present invention is preferably used as an ink set comprising a plurality of inkjet recording inks, and in this case it is preferable to form an ink set by using the ink composition in combination with inks exhibiting cyan, magenta, and black colors, and as necessary an ink exhibiting a white color.

The order in which colored ink compositions are discharged in the inkjet recording method of the present invention is not particularly limited, but it is preferable to apply to a recording medium from a colored ink composition having a low lightness; when the ink composition of the present invention, cyan, magenta, and black ink compositions are used, they are preferably applied on top of the recording medium in the order the ink composition of the present invention → cyan → magenta → black. Furthermore, when white is additionally used, they are preferably applied on top of the recording medium in the order white → the ink composition of the present invention → cyan → magenta → black. Moreover, the present invention is not limited thereto, and an ink set comprising a total of eight colors, that is, the ink composition of the present invention, and light cyan, light magenta, cyan, magenta, light black (gray), black and white ink compositions may preferably be used, and in this case they are applied on top of the recording medium in the order white → light cyan light magenta → light black → the ink composition of the present invention → cyan → magenta → black.

In the present invention, the recording medium is not particularly limited, and a recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

### Examples

The present invention is explained in further detail by reference to Examples However, the present invention should not be construed as being limited to these Examples. 'Parts' described below means 'parts by weight', and '%' described below means 'weight %' unless otherwise specified.

### 1. Preparation of polymer having repeating unit represented by Formula (1)

In the Examples below, polymers A to C, prepared as follows, were used.

### (Synthesis of polymer A)

9.76 parts of 9(10H)-acridone and 5.61 parts of potassium *t*-butoxide were dissolved in 30 parts of dimethyl sulfoxide and heated to 45°C. 15.26 parts of chloromethylstyrene was added dropwise thereto, and stirring was carried out while heating at 50°C for a further 5 hours. This reaction mixture was poured into 200 parts of distilled water while stirring, and a precipitate thus obtained was filtered and washed, thus giving 11.9 parts of monomer 1.

A three-necked flask was flushed with nitrogen and charged with 15 parts of methyl ethyl ketone, stirring was carried out using a stirrer (Three-One Motor, Shinto Scientific Co., Ltd.), and the temperature was raised to 78°C by heating while passing nitrogen through the interior of the flask. A monomer solution and an initiator solution described below, which were separately prepared, were each added dropwise to the above-mentioned liquid simultaneously over 2 hours. After the dropwise addition, 0.08 parts of V-65 below was added, and stirring was carried out while heating at 78°C for 3 hours. The reaction mixture thus obtained was poured into 1,000 parts of hexane while stirring, and a precipitate thus formed was collected by filtration and dried by heating, thus giving polymer A.

**(Monomer solution)**

| | |
|---|---|
| Monomer 1 | 3.0 parts |
| AA-6 (polymethyl methacrylate having methacryloyl group at terminal, number-average molecular weight 6,000, Toagosei Co., Ltd.) | 21.0 parts |
| 3-(*N*,*N*-Dimethylaminopropylacrylamide) | 6.0 parts |
| Methyl ethyl ketone | 45 parts |
| (Initiator solution) | |
| V-65 (2,2-azobis(2,4-dimethylvaleronitrile), Wako Pure Chemical Industries, Ltd.) | 0.04 parts |
| Methyl ethyl ketone | 9.6 parts |

### (Synthesis of polymer B)

Polymer B was obtained in the same manner as in 'Synthesis of polymer A' except that the AA-6 (polymethyl methacrylate having methacryloyl group at terminal) used in 'Synthesis of polymer A' was changed to NK Ester M-230G (methoxypolyethylene glycol methacrylate, Shin-Nakamura Chemical Co., Ltd.).

### (Synthesis of polymer C)

9.56 parts of *N*-(2-hydroxyethyl)phthalimide, 5.16 parts of triethylamine, and 50 parts of ethyl acetate were dissolved and heated to 40°C. 7.76 parts of 2-methacryloyloxyethyl isocyanate (Karenz MOI, Showa Denko K.K.) was gradually added dropwise thereto. Stirring was carried out while heating at 45°C for a further 7 hours. The reaction mixture thus obtained was extracted with ethyl acetate, washed with water, washed with saturated saline, dried, and concentrated, thus giving 15.1 parts of monomer 2.

Polymer C was obtained in the same manner as in 'Synthesis of polymer A' except that the monomer 1 used in 'Synthesis of polymer A' was changed to monomer 2 above.

### 2. Preparation and evaluation of cationically polymerizable yellow pigment dispersion and yellow ink composition

### 2-1. Preparation of yellow pigment dispersion

### (Preparation of yellow pigment dispersion)

Yellow pigment dispersions A to K and X were prepared via a preliminary dispersion step and a main dispersion step.

Preliminary dispersion step: the components shown in Table 1 were mixed and stirred with a stirrer for 1 hour.

Main dispersion step: the mixture after stirring was dispersed by bead mill dispersion, thus giving a pigment dispersion. Dispersion conditions were zirconia beads with a diameter of 0.65 mm charged at a packing ratio of 70 vol %, a peripheral speed of 9 m/s, and a dispersion time of 2 to 8 hours.

**(Table 1)**

| Composition of yellow pigment dispersion (weight parts) | | Examples | | | | | Comparative examples | | | | | | |
|---|---|---|---|---|---|---|---|---|---|---|---|---|---|
| | | A | B | C | D | E | F | G | H | I | J | K | X |
| Yellow pigment | PY185 | 30.0 | 30.0 | 30.0 | 30.0 | 30.0 | 30.0 | 30.0 | 30.0 | 30.0 | 30.0 | 30.0 | - |
| | PY150 | - | - | - | - | - | - | - | - | - | - | - | 30.0 |
| Cationically polymerizable compound | OXT-221 | 60.0 | 60.0 | 60.0 | 65.0 | 66.0 | 48.1 | 39.1 | 60.1 | 49.0 | 40.0 | 61.0 | 60.0 |
| Dispersant | Polymer A | 10.0 | - | - | 5.0 | 4.0 | - | - | - | - | - | - | 10.0 |
| | Polymer B | - | 10.0 | - | - | - | - | - | - | - | - | - | - |
| | Polymer C | - | - | 10.0 | - | - | - | - | - | - | - | - | - |
| | BYK116 | - | - | - | - | - | 21.0 | - | - | 21.0 | - | - | - |
| | BYK168 | - | - | - | - | - | - | 30.0 | - | - | 30.0 | - | - |
| | BYK182 | - | - | - | - | - | - | - | 9.0 | - | - | 9.0 | - |
| Dispersion aid | Solsperse 22000 | - | - | - | - | - | 0.9 | 0.9 | 0.9 | - | - | - | - |

### (Materials used are as follows)

- Yellow pigment : PY185 (C.I. Pigment Yellow 185, Paliotol Yellow D1155, manufactured by BASF) 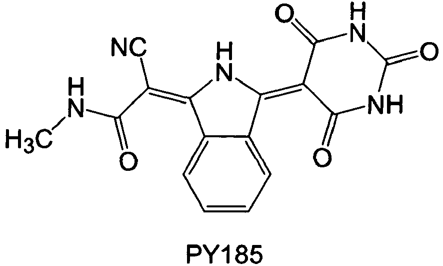
- Yellow Pigment: PY150 (C.I. Pigment Yellow 150)
- Cationically polymerizable compound: OXT-221 (cyclic ether compound, manufactured by Toagosei Co., Ltd.)
- Comparative dispersant: BYK116 (DISPERBYK-116, manufactured by BYK Chemie Co.)
- Comparative dispersant: BYK168 (DISPERBYK-168, manufactured by BYK Chemie Co.)
- Comparative dispersant: BYK182 (DISPERBYK-182, manufactured by BYK Chemie Co.)

### 2-2. Evaluation of yellow pigment dispersions A to K and X

The flowability, particle size distribution, and storage stability of yellow pigment dispersions A to K and X obtained were evaluated. The evaluation methods are described below.

### <Flowability>

The flowability of a yellow pigment dispersion after the main dispersion was evaluated in accordance with the procedure below. About 50 cc of the yellow pigment dispersion after the main dispersion was transferred to a new 200 cc capacity plastic disposable beaker. Following this, the disposable beaker was allowed to stand for 15 seconds with its opening part downwardly inclined relative to the horizontal direction at 30 degrees, and the flowability was evaluated from the amount of dispersion that had flowed out. Here, the liquid temperature was 25°C. The evaluation criteria were as follows, 'good' and 'acceptable' being criteria that satisfy the required performance.
Good: at least 90% of the mixture had flowed out, and the residue in the disposable beaker was less than 10%.
Acceptable: at least 70% of the mixture had flowed out, and the residue in the disposable beaker was less than 30%.
Unacceptable: the majority of the mixture remained in the disposable beaker, and the amount thereof was at least 30%.

The results are shown in Table 2.

### <Particle size distribution>

The particle size distribution of a yellow pigment dispersion was measured using commercial particle size distribution analyzer (LA-920 laser diffraction/scattering type particle size distribution measurement equipment (Horiba Ltd.)). The evaluation criteria were as follows, 'excellent', 'good', and 'acceptable' being criteria that satisfy the required performance.
Excellent: a distribution of 1 µm or greater was not detected, and the weight-average particle size was less than 100 nm.
Good: a distribution of 1 µm or greater was not detected, and the weight-average particle size was less than 300 nm but at least 100 nm.
Acceptable: a distribution of 1 µm or greater was not detected, and the weight-average particle size was no greater than 600 nm but at least 300 nm. Unacceptable: a distribution of 1 µm or greater was detected.

The results are shown in Table 2.

### <Storage stability>

A screw-cap glass bottle (100 cc) was charged with 50 cc (cm³) of a yellow pigment dispersion and capped tightly, and stored in a constant temperature and constant humidity chamber set at a temperature of 60°C and a humidity of 45% RH for 30 days, and the storage stability of the yellow pigment dispersion was evaluated from percentage changes in viscosity and weight-average particle size and the presence/absence of a precipitate. The evaluation criteria for storage stability of a yellow pigment dispersion were as follows, 'good' and 'acceptable' being criteria that satisfy the required performance.
Good: percentage changes in both viscosity and weight-average particle size were less than 10%. A precipitate was not observed.
Acceptable: percentage change in viscosity was less than 10%, and percentage change in weight-average particle size was at least 10% but less than 50%. A precipitate was not observed.
Unacceptable: at least one of a percentage change in viscosity of 10% or greater, a percentage change in weight-average particle size of 50% or greater, or the occurrence of a precipitate was observed.

The results are shown in Table 2.

**(Table 2)**

| Yellow pigment dispersion | | Flowability | Particle size distribution | Storage stability |
|---|---|---|---|---|
| Examples | A | Good | Excellent | Good |
| | B | Good | Excellent | Good |
| | C | Good | Excellent | Good |
| | D | Good | Excellent | Good |
| | E | Acceptable | Good | Acceptable |
| Comparative Examples | F | Unacceptable | Unacceptable | Unacceptable |
| | G | Good | Excellent | Unacceptable |
| | H | Good | Excellent | Unacceptable |
| | I | Good | Excellent | Unacceptable |
| | J | Unacceptable | Unacceptable | Unacceptable |
| | K | Unacceptable | Unacceptable | Unacceptable |
| | X | Unacceptable | Unacceptable | Unacceptable |

### 2-3. Preparation of yellow ink composition

The components (units: parts by weight) shown in Table 3 were mixed and dissolved by stirring, thus giving cationically polymerizable yellow ink compositions A to K and X.

**(Table 3)**

| Composition of yellow ink (weight parts) | | Examples | | | | | Comparative examples | | | | | | |
|---|---|---|---|---|---|---|---|---|---|---|---|---|---|
| | | A | B | C | D | E | F | G | H | I | J | K | X |
| Yellow pigment dispersion | A | 33.4 | - | - | - | - | - | - | - | - | - | - | - |
| | B | - | 33.4 | - | - | - | - | - | - | - | - | - | - |
| | C | - | - | 33.4 | - | - | - | - | - | - | - | - | - |
| | D | - | - | - | 33.4 | - | - | - | - | - | - | - | - |
| | E | - | - | - | - | 33.4 | - | - | - | - | - | - | - |
| | F | - | - | - | - | - | 33.4 | - | - | - | - | - | - |
| | G | - | - | - | - | - | - | 33.4 | - | - | - | - | - |
| | H | - | - | - | - | - | - | - | 33.4 | - | - | - | - |
| | I | - | - | - | - | - | - | - | - | 33.4 | - | - | - |
| | J | - | - | - | - | - | - | - | - | - | 33.4 | - | - |
| | K | - | - | - | - | - | - | - | - | - | - | 33.4 | - |
| | X | - | - | - | - | - | - | - | - | - | - | - | 33.4 |
| Cationically polymerizable compound | OXT-221 | 10.6 | 10.6 | 10.6 | 10.6 | 10.6 | 10.6 | 10.6 | 10.6 | 10.6 | 10.6 | 10.6 | 10.6 |
| | OXT-211 | 10.0 | 10.0 | 10.0 | 10.0 | 10.0 | 10.0 | 10.0 | 10.0 | 10.0 | 10.0 | 10.0 | 10.0 |
| | 1,2:8,9-Diepoxy limonene | 40.0 | 40.0 | 40.0 | 40.0 | 40.0 | 40.0 | 40.0 | 40.0 | 40.0 | 40.0 | 40.0 | 40.0 |
| Photo-acid generator A | | 4.0 | 4.0 | 4.0 | 4.0 | 4.0 | 4.0 | 4.0 | 4.0 | 4.0 | 4.0 | 4.0 | 4.0 |
| Sensitizer A | | 2.0 | 2.0 | 2.0 | 2.0 | 2.0 | 2.0 | 2.0 | 2.0 | 2.0 | 2.0 | 2.0 | 2.0 |

### (Materials used are as follows)

- Cationically polymerizable compound: OXT-221 (cyclic ether compound, manufactured by Toagosei Co., Ltd.)
- Cationically polymerizable compound: OXT-211 (cyclic ether compound, manufactured by Toagosei Co., Ltd.)
- Cationically polymerizable compound: 1, 2, 8, 9-Diepoxy limonene (cyclic ether compound, manufactured by DAICEL-CYTEC COMPANY LTD.)

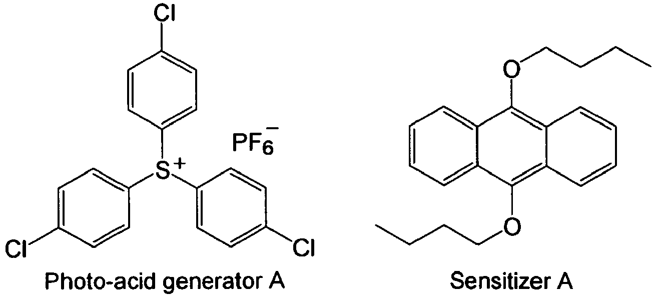

### 2-4. Evaluation of yellow ink compositions A to K and X

### (Recording printer)

An inkjet recording head unit was formed from a head set in which two commercial heads (CE2 head, Toshiba Tec Corporation) were arranged to give 600 dpi. The ink head part was charged in turn with yellow ink compositions A to K and X prepared above. Two commercial UV-curing lamps (metal halide lamps) were disposed at opposite ends of the head unit. The inkjet recording head unit part was fixed by a long metal shaft, and was reciprocated at a variable speed by means of a power part that could carry out reciprocation. The power part that could carry out reciprocation was equipped with a tube for supplying an ink composition and electric wiring for controlling the head. Warm water was sent from a thermostatted bath to the inkjet recording head unit in order to adjust the temperature of the inkjet recording head unit from 30°C to 70°C.

Opposite ends of the fixing shaft for the inkjet recording head unit part were equipped with a BOX for carrying out maintenance and cleaning of the head. Furthermore, disposed outside them were a PC for controlling the inkjet recording printer and an ink tank.

A recording medium suction stage that could fix a recording medium by suction was disposed immediately beneath the head. The recording medium was transported in a direction perpendicular to the reciprocating direction of the head by means of a plurality of recording medium transport rollers and a recording medium wind-up roller. The recording medium was a white PVC sheet.

The discharge frequency of the head and the speed for reciprocation of the head were controlled so that an image was always printed at a fired droplet density of 600 x 600 dpi. Furthermore, the drive voltage and the head temperature were adjusted so that the amount of ink applied onto a recording medium was 4.4 mg/cm². The illumination intensity from the metal halide lamp was fixed at about 500 mW/cm² on the recording medium. The speed of reciprocation and an aperture width of a slit within the metal halide lamp were adjusted so that the illumination intensity could be varied.

The printer was charged with the yellow ink composition prepared above, a cured coating was prepared, and the curability, hue, and light fastness were evaluated. Evaluation of ink storage stability was carried out by examining physical properties after charging it into a light-shielding bottle and storing it under standardized conditions. Furthermore, discharge properties were evaluated using the same printer. Detailed procedures, conditions, and criteria for evaluation thereof were as follows.

### <Curability>

Curability is defined as the exposure energy at which there is no tackiness on the exposed surface (becoming tack-free). The presence or absence of tackiness of a printed surface was determined by pressing plain paper (Photocopy Paper C2, manufactured by Fuji Xerox Co., Ltd.) thereagainst immediately after printing; when the ink composition transferred tackiness was present, and when there was no transfer tackiness was absent.

Exposure energy was varied between 100 mJ/cm², 150 mJ/cm², 200 mJ/cm², 250 mJ/cm², and 300 mJ/cm².

The lower the exposure energy the more preferable it is, and the evaluation criteria were as follows, 200 mJ/cm² or less being the range of performance required.
Excellent: becoming tack-free at 100 mJ/cm².
Good: becoming tack-free at 150 mJ/cm².
Acceptable: becoming tack-free at 200 mJ/cm².
Unacceptable: becoming tack-free at 250 mJ/cm².
Poor: not becoming tack-free at 300 mJ/cm².

The results are shown in Table 4.

### <Hue (saturation and color intensity)>

A yellow solid image was printed on a white PVC substrate (amount of ink: 4.4 mg/cm², exposure being carried out with exposure energy: 1,500 mJ/cm²), thus giving a cured yellow coating. Reflection density DY and a*, b* values (saturation) of the cured coating were measured using a commercial colorimeter (SPM100-II, Gretag). Evaluation criteria were as follows.

### Saturation

Excellent: 110 < b*
Good: 105 < b* ≤ 110
Acceptable: 100 < b ≤ 105
Unacceptable: b* ≤ 100
Color intensity
Excellent: 1.8 < DY
Good: 1.7 < DY ≤ 1.8
Acceptable: 1.6 < DY ≤ 1.7
Unacceptable: DY ≤ 1.6

The results are shown in Table 4.

### <Storage stability>

A screw-cap glass bottle (100 cc) was charged with 50 cc (cm³) of an ink composition and capped tightly, and stored in a constant temperature and constant humidity chamber set at a temperature of 60°C and a humidity of 45% RH for 30 days, and the storage stability of the ink composition was evaluated by percentage changes in viscosity and weight-average particle size and the presence/absence of a precipitate.

The evaluation criteria for storage stability (high temperature) of the ink composition were as follows, good and acceptable being criteria that satisfy the required performance.
Good: percentage changes in both viscosity and weight-average particle size were less than 10%. A precipitate was not observed.
Acceptable: percentage change in viscosity was less than 10%, and percentage change in weight-average particle size was at least 10% but less than 50%. A precipitate was not observed.
Unacceptable: at least one of a percentage change in viscosity of 10% or greater, a percentage change in weight-average particle size of 50% or greater, or the occurrence of a precipitate was observed.

The results are shown in Table 4.

### <Light fastness of cured coating>

A yellow solid image was printed on a white PVC substrate (amount of ink: 4.4 mg/cm², exposure being carried out with exposure energy: 1,500 mJ/cm²), thus giving a cured yellow coating. The reflection density (DY (initial)) of the cured coating immediately after curing was measured using a commercial colorimeter (SPM100-II, Gretag). The coating after measurement was stored in a light fastness tester for 4 weeks, and the reflection density after storage (DY (after storage)) was measured. The percentage change in reflection density between that before and that after being stored in the light fastness tester was calculated, and light fastness was evaluated in accordance with the criteria below.
Excellent: percentage change in reflection density was less than 10%.
Good: percentage change in reflection density was at least 10% but less than 15%.
Acceptable: percentage change in reflection density was at least 15% but less than 20%.
Unacceptable: percentage change in reflection density was at least 20% but less than 30%.
Poor: percentage change in reflection density was 30% or greater.

The results are shown in Table 4.

### <Discharge reliability>

The ink head of the above printer was charged with an ink composition. A thermostatted chamber was set so that the head temperature was 45±1°C, and the head drive voltage was kept at a constant value of 25.0 (V).

Printing was carried out at a discharge frequency of 6.2 kHz, and discharge reliability was evaluated from the presence/absence of misfiring. The evaluation criteria were as follows, good and acceptable being criteria that satisfy the required performance.
Good: there were no nozzles in which misfiring occurred.
Acceptable: 1 or 2 nozzles in which misfiring occurred.
Unacceptable: at least 3 but less than 10 nozzles in which misfiring occurred.
Poor: at least 10 nozzles in which misfiring occurred.

The results are shown in Table 4.

**(Table 4)**

| Cationically polymerizable yellow ink | | Curability | Hue (saturation) | Hue (color intensity) | Storage stability | Light fastness of cured coating | Discharge reliability |
|---|---|---|---|---|---|---|---|
| Examples | A | Excellent | Excellent | Excellent | Good | Excellent | Good |
| | B | Excellent | Excellent | Excellent | Good | Excellent | Good |
| | C | Excellent | Excellent | Excellent | Good | Excellent | Good |
| | D | Excellent | Excellent | Excellent | Good | Excellent | Good |
| | E | Excellent | Acceptable | Acceptable | Acceptable | Excellent | Acceptable |
| Comparative examples | F | Poor | Excellent | Excellent | Unacceptable | Excellent | Acceptable |
| | G | Poor | Excellent | Excellent | Unacceptable | Excellent | Acceptable |
| | H | Poor | Excellent | Excellent | Unacceptable | Excellent | Acceptable |
| | I | Poor | Excellent | Excellent | Unacceptable | Excellent | Acceptable |
| | J | Poor | Excellent | Excellent | Unacceptable | Excellent | Acceptable |
| | K | Unacceptable | Excellent | Excellent | Unacceptable | Excellent | Acceptable |
| | X | Excellent | Unacceptable | Unacceptable | Unacceptable | Excellent | Unacceptable |

### 2-5. Evaluation of pigment dispersion when pigment concentration was changed and dispersion was carried out

### (Preparation of yellow pigment dispersion)

The components shown in Table 5 were mixed, and yellow pigment dispersions L1, L2, L3, L4, and L5 having pigment concentrations of 10 wt %, 15 wt %, 30 wt %, 35 wt %, and 40 wt % were prepared via the preliminary dispersion step and the main dispersion step.

**(Table 5)**

| Composition of yellow pigment dispersion (weight parts) | | L1 | L2 | L3 | L4 | L5 |
|---|---|---|---|---|---|---|
| Yellow pigment | PY185 | 10.0 | 15.0 | 30.0 | 35.0 | 40.0 |
| Cationically polymerizable compound | OXT-221 | 87.3 | 81.0 | 62.0 | 55.7 | 49.3 |
| Dispersant | Polymer A | 2.7 | 4.0 | 8.0 | 9.3 | 10.7 |

### (Preparation of yellow ink composition)

The components shown in Table 6 to Table 9 (units: parts by weight) were mixed and dissolved by stirring, thus giving ink compositions. Here, the concentration of pigment dispersions L1 to L5 was adjusted so that the pigment concentration of yellow ink compositions L1 (5) to L5 (5) was about 5 wt %. Similarly, the concentration of the pigment dispersions was adjusted so that the pigment concentration of yellow ink compositions L1 (7) to L5 (7) was about 7 wt %, the pigment concentration of yellow ink compositions L1 (10) to L5 (10) was about 10 wt %, and the pigment concentration of yellow ink compositions L1 (12) to L5 (12) was about 12 wt %.

**(Table 6)**

| Composition of yellow ink (weight parts) | | Examples | | | | |
|---|---|---|---|---|---|---|
| | | L1(5) | L2(5) | L3(5) | L4(5) | L5(5) |
| Yellow pigment dispersion | L1 | 50.0 | - | - | - | - |
| | L2 | - | 33.3 | - | - | - |
| | L3 | - | - | 16.7 | - | - |
| | L4 | - | - | - | 14.3 | - |
| | L5 | - | - | - | - | 12.5 |
| Cationically polymerizable compound | OXT-221 | - | - | 10.0 | 12.0 | 14.0 |
| | OXT-211 | 5.0 | 5.0 | 5.0 | 5.0 | 5.0 |
| | 1,2:8,9-Diepoxy limonene | 40.5 | 57.2 | 63.8 | 64.2 | 64.0 |
| Photo-acid generator A | | 3.0 | 3.0 | 3.0 | 3.0 | 3.0 |
| Sensitizer A | | 1.5 | 1.5 | 1.5 | 1.5 | 1.5 |

**(Table 7)**

| Composition of yellow ink (weight parts) | | Examples | | | | |
|---|---|---|---|---|---|---|
| | | L1(7) | L2(7) | L3(7) | L4(7) | L5(7) |
| Yellow pigment dispersion | L1 | 70.0 | - | - | - | - |
| | L2 | - | 46.7 | - | - | - |
| | L3 | - | - | 23.3 | - | - |
| | L4 | | - | - | 20.0 | - |
| | L5 | - | - | - | - | 17.5 |
| Cationically polymerizable compound | OXT-221 | - | - | 10.0 | 12.0 | 14.0 |
| | OXT-211 | 5.0 | 5.0 | 5.0 | 5.0 | 5.0 |
| | 1,2:8,9-Diepoxy limonene | 20.5 | 43.8 | 57.2 | 58.5 | 59.0 |
| Photo-acid generator A | | 3.0 | 3.0 | 3.0 | 3.0 | 3.0 |
| Sensitizer A | | 1.5 | 1.5 | 1.5 | 1.5 | 1.5 |

**(Table 8)**

| Composition of yellow ink (weight parts) | | Examples | | | | |
|---|---|---|---|---|---|---|
| | | L1(10) | L2(10) | L3(10) | L4(10) | L5(10) |
| Yellow pigment dispersion | L1 | - | - | - | - | - |
| | L2 | | 66.7 | - | - | - |
| | L3 | | - | 33.3 | - | - |
| | L4 | | - | - | 28.8 | - |
| | L5 | | - | - | - | 25.0 |
| Cationically polymerizable compound | OXT-221 | - | - | 10.0 | 12.0 | 14.0 |
| | OXT-211 | | 5.0 | 5.0 | 5.0 | 5.0 |
| | 1,2:8,9-Diepoxy limonene | | 23.8 | 47.2 | 49.7 | 51.5 |
| Photo-acid generator A | | - | 3.0 | 3.0 | 3.0 | 3.0 |
| Sensitizer A | | - | 1.5 | 1.5 | 1.5 | 1.5 |

**(Table 9)**

| Composition of yellow ink (weight parts) | | Examples | | | | |
|---|---|---|---|---|---|---|
| | | L1(12) | L2(12) | L3(12) | L4(12) | L5(12) |
| Yellow pigment dispersion | L1 | - | - | - | - | - |
| | L2 | | 80.0 | - | - | - |
| | L3 | | - | 40.0 | - | - |
| | L4 | | - | - | 34.3 | - |
| | L5 | | - | - | - | 30.0 |
| Cationically polymerizable compound | OXT-221 | - | - | 10.0 | 12.0 | 14.0 |
| | OXT-211 | | 5.0 | 5.0 | 5.0 | 5.0 |
| | 1,2,8,9-Diepoxy limonene | | 10.5 | 40.5 | 44.2 | 46.5 |
| Photo-acid generator A | | - | 3.0 | 3.0 | 3.0 | 3.0 |
| Sensitizer A | | - | 1.5 | 1.5 | 1.5 | 1.5 |

### (Evaluation of performance of yellow pigment dispersion)

The flowability, particle size distribution, and applicability to high concentration ink of the yellow pigment dispersions prepared with various pigment concentrations were evaluated. The evaluation methods for flowability and particle size distribution were as described above. The detailed procedure, conditions, and criteria for evaluation of applicability to high concentration ink were as follows. The evaluation results are shown in Table 10.

### <Applicability to high concentration ink>

Applicability to preparation of an ink composition having a high pigment concentration was evaluated in accordance with the criteria below.
Excellent: could be applied to preparation of an ink of at least 12 wt %.
Good: could be applied to preparation of an ink of at least 10 wt % but less than 12 wt %.
Acceptable: could be applied to preparation of an ink of at least 8 wt % but less than 10 wt %.
Unacceptable: could not be applied to preparation of at least 8 wt %.

**(Table 10)**

| Yellow pigment dispersion | | L1 | L2 | L3 | L4 | L5 |
|---|---|---|---|---|---|---|
| Results | Flowability | Good | Good | Good | Good | Acceptable |
| | Particle size distribution | Excellent | Excellent | Excellent | Excellent | Excellent |
| | Applicability to high concentration ink | Acceptable | Excellent | Excellent | Excellent | Excellent |

### 3. Preparation and evaluation of radically polymerizable yellow pigment dispersion and yellow ink composition

### 3-1. Preparation of yellow pigment dispersion

Yellow pigment dispersions M to W shown in Table 11 were prepared via a preliminary dispersion step and a main dispersion step.

**(Table 11)**

| Composition of yellow pigment dispersion (weight parts) | | Examples | | | | | Comparative examples | | | | | |
|---|---|---|---|---|---|---|---|---|---|---|---|---|
| | | M | N | O | P | Q | R | S | T | U | V | W |
| Yellow pigment | PY185 | 30.0 | 30.0 | 30.0 | 30.0 | 30.0 | 30.0 | 30.0 | 30.0 | 30.0 | 30.0 | 30.0 |
| Radically polymerizable compound | DPGDA | 60.0 | 60.0 | 60.0 | 65.0 | 66.0 | 48.1 | 39.1 | 60.1 | 49.0 | 40.0 | 61.0 |
| Dispersant | Polymer A | 10.0 | - | - | 5.0 | 4.0 | - | - | - | - | - | - |
| | Polymer B | Polymer B | 10.0 | - | - | - | - | - | - | - | - | - |
| | Polymer C | - | - | 10.0 | - | - | - | - | - | - | - | - |
| | BYK116 | - | - | - | - | - | 21.0 | - | - | 21.0 | - | - |
| | BYK168 | - | - | - | - | - | - | 30.0 | - | - | 30.0 | - |
| | BYK182 | - | - | - | - | - | - | - | 9.0 | - | - | 9.0 |
| Dispersion aid | Solsperse 22000 | - | - | - | - | - | 0.9 | 0.9 | 0.9 | - | - | - |

### (Material used is as follows)

- Radically polymerizable compound: DPGDA (acrylate compound, manufactured by Shin-Nakamura Chemical Co., Ltd.)

### 3-2. Evaluation of yellow pigment dispersions M to W

The flowability, particle size distribution, and storage stability of yellow pigment dispersions M to W were evaluated. The results are shown in Table 12.

**(Table 12)**

| Yellow pigment dispersion | | Flowability | Particle size distribution | Storage stability |
|---|---|---|---|---|
| Examples | M | Good | Excellent | Good |
| | N | Good | Excellent | Good |
| | O | Good | Excellent | Good |
| | P | Good | Excellent | Good |
| | Q | Acceptable | Good | Acceptable |
| Comparative Examples | R | Unacceptable | Unacceptable | Unacceptable |
| | S | Good | Excellent | Unacceptable |
| | T | Good | Excellent | Unacceptable |
| | U | Good | Excellent | Unacceptable |
| | V | Unacceptable | Unacceptable | Unacceptable |
| | W | Unacceptable | Unacceptable | Unacceptable |

### 3-3. Preparation of yellow ink composition

The components shown in Table 13 (units: parts by weight) were mixed and dissolved by stirring, thus giving radically polymerizable yellow ink compositions M to W.

**(Table 13)**

| Composition of yellow ink (weight parts) | | Examples | | | | | Comparative **examples** | | | | | |
|---|---|---|---|---|---|---|---|---|---|---|---|---|
| | | M | N | O | **P** | Q | R | S | T | U | V | W |
| Yellow pigment dispersion | L | 33.4 | - | - | - | - | - | - | - | - | - | - |
| | M | - | 33.4 | - | - | - | - | - | - | - | - | - |
| | N | - | - | 33.4 | - | - | - | - | - | - | - | - |
| | O | - | - | - | 33.4 | - | - | - | - | - | - | - |
| | P | - | - | - | - | 33.4 | - | - | - | - | - | - |
| | Q | - | - | - | - | - | 33.4 | - | - | - | - | - |
| | R | - | - | - | - | - | - | 33.4 | - | - | - | - |
| | S | - | - | - | - | - | - | - | 33.4 | - | - | - |
| | T | - | - | - | - | - | - | - | - | 33.4 | - | - |
| | U | - | - | - | - | - | - | - | - I | - | 33.4 | - |
| | V | - | - | - | - | - | - | - | - | - | - | 33.4 |
| Radically polymerizable compound | DPGDA | 42.6 | 42.6 | 42.6 | 42.6 | 42.6 | 42.6 | 42.6 | 42.6 | 42.6 | 42.6 | 42.6 |
| | PEA | 10.0 | 10.0 | 10.0 | 10.0 | 10.0 | 10.0 | 10.0 | 10.0 | 10.0 | 10.0 | 10.0 |
| | A-TMPT | 2.0 | 2.0 | 2.0 | 2.0 | 2.0 | 2.0 | 2.0 | 2.0 | 2.0 | 2.0 | 2.0 |
| Initiator | DAROCUR TPO | 3.0 | 3.0 | 3.0 | 3.0 | 3.0 | 3.0 | 3.0 | 3.0 | 3.0 | 3.0 | 3.0 |
| | Irgacure819 | 3.0 | 3.0 | 3.0 | 3.0 | 3.0 | 3.0 | 3.0 | 3.0 | 3.0 | 3.0 | 3.0 |
| | Irgacure907 | 3.0 | 3.0 | 3.0 | 3.0 | 3.0 | 3.0 | 3.0 | 3.0 | 3.0 | 3.0 | 3.0 |
| Sensitizer B | | 3.0 | 3.0 | 3.0 | 3.0 | 3.0 | 3.0 | 3.0 | 3.0 | 3.0 | 3.0 | 3.0 |

### (Materials used are as follows)

- Radically polymerizable compound: DPGDA (acrylate compound, manufactured by Shin-Nakamura Chemical Co., Ltd.)
- Radically polymerizable compound: PEA (phenoxyethyl acrylate, manufactured by DAI-ICHI KOGYO SEIYAKU Co., Ltd.)
- Radically polymerizable compound: A-TMPT (trimethylolpropanetriacrylate, manufactured by Shin-Nakamura Chemical Co., Ltd.)
- Initiator: DAROCUR TPO (2, 4, 6-trimethylbenzoyldiphenylphosphine oxide, manufactured by Chiba Specialty Chemicals Co., Ltd.)
- Initiator: Irgacure 819 (bis(2, 4, 6-trimethylbenzoyl) phenylphosphine oxide, manufactured by Chiba Specialty Chemicals Co., Ltd.)
- Initiator: Irgacure 907 (2-methyl-1-(4-methylthiophenyl)-2-morpholinopropan-1-one, manufactured by Chiba Specialty Chemicals Co., Ltd.)
- Sensitizer B: Speedcure ITX (a mixture of 2-Isopropylthioxanthone and 4-Isopropylthioxanthone, manufactured by Lambson)

### 3-4. Evaluation of radically polymerizable yellow ink compositions M to W

The above printer was charged with the prepared yellow ink composition, a cured coating was prepared, and the curability, hue, and light fastness were evaluated. Evaluation of ink storage stability was carried out by examining physical properties after charging it into a light-shielding bottle and storing it under standardized conditions. Furthermore, discharge properties were evaluated using the same printer. The evaluation criteria for curability were as follows. The respective evaluation results are shown in Table 14.

### <Curability>

Curability is defined as the exposure energy at which there is no tackiness on the exposed surface (becoming tack-free). The presence or absence of tackiness of a printed surface was determined by pressing plain paper (Photocopy Paper C2, manufactured by Fuji Xerox Co., Ltd.) thereagainst immediately after printing; when the ink composition transferred tackiness was present, and when there was no transfer tackiness was absent.

Exposure energy was varied between 300 mJ/cm², 600 mJ/cm², 900 mJ/cm², 1,200 mJ/cm², and 1,500 mJ/cm².

The lower the exposure energy the more preferable it is, and the evaluation criteria were as follows, 900 mJ/cm² or less being the range of performance required.
Excellent: becoming tack-free at 300 mJ/cm².
Good: becoming tack-free at 600 mJ/cm².
Acceptable: becoming tack-free at 900 mJ/cm².
Unacceptable: becoming tack-free at 1,200 mJ/cm².
Poor: not becoming tack-free at 1,500 mJ/cm².

**(Table 14)**

| Radically polymerizable yellow ink | | Curability | Hue (saturation) | Hue (color intensity) | Storage stability | Light fastness of cured coating | Discharge reliability |
|---|---|---|---|---|---|---|---|
| Examples | M | Excellent | Excellent | Excellent | Good | Excellent | Good |
| | N | Excellent | Excellent | Excellent | Good | Excellent | Good |
| | O | Excellent | Excellent | Excellent | Good | Excellent | Good |
| | P | Excellent | Excellent | Excellent | Good | Excellent | Good |
| | Q | Excellent | Acceptable | Acceptable | Acceptable | Excellent | Acceptable |
| Comparative examples | R | Excellent | Excellent | Excellent | Unacceptable | Excellent | Acceptable |
| | S | Excellent | Excellent | Excellent | Unacceptable | Excellent | Acceptable |
| | T | Excellent | Excellent | Excellent | Unacceptable | Excellent | Acceptable |
| | U | Excellent | Excellent | Excellent | Unacceptable | Excellent | Acceptable |
| | V | Excellent | Excellent | Excellent | Unacceptable | Excellent | Acceptable |
| | W | Excellent | Excellent | Excellent | Unacceptable | Excellent | Acceptable |

## Claims

1. An inkjet recording method comprising:
a step of discharging an ink composition onto a recording medium; and
a step of curing the ink composition by irradiating the discharged ink composition with actinic radiation;
wherein the ink composition comprises:
C.I. Pigment Yellow 185; and
a polymer having a repeating unit represented by Formula (1): 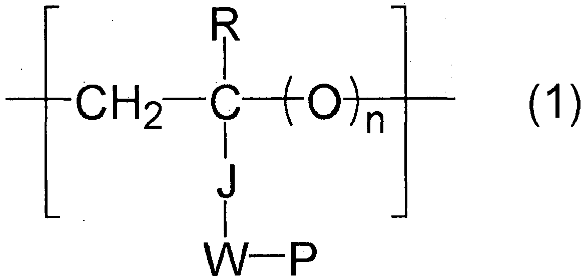 wherein:
R denotes a hydrogen atom or a methyl group,
J denotes -CO-, -COO-, -CONR¹-, -OCO-, a methylene group, or a phenylene group,
R¹ denotes a hydrogen atom, an alkyl group, or an aryl group,
n denotes 0 or 1,
W denotes a single bond or a divalent linking group, and
P denotes a heterocyclic residue or aromatic quinone structure-containing residue forming a basic skeleton of an organic pigment.

2. A method according to Claim 1, wherein the C.I. Pigment Yellow 185 has a content of 15 to 35 wt % relative to the total amount of the pigment dispersion.

3. A pigment dispersion comprising C.I. Pigment Yellow 185 and a polymer having a repeating unit represented by Formula (1), as defined in Claim 1, and a repeating unit derived from a polymerizable oligomer or polymerizable polymer having an ethylenically unsaturated bond at a terminal.

4. The pigment dispersion according to Claim 3, wherein the polymer having a repeating unit represented by Formula (1) further comprises a repeating unit derived from a monomer having a nitrogen atom.

5. The pigment dispersion according to Claim 3 or 4, wherein the polymer having a repeating unit represented by Formula (1) has a content of 5 to 10 wt % relative to the total amount of the pigment dispersion.

6. The pigment dispersion according to any one of Claims 3 to 5 which comprises a polymerizable compound.

7. The pigment dispersion according to Claim 6, wherein the polymerizable compound comprises a cationically polymerizable compound and/or a radically polymerizable compound.

8. An ink composition comprising a pigment dispersion according to claim 3.

9. The ink composition according to Claim 8, wherein the C.I. Pigment Yellow 185 has a content of 5 to 12 wt % relative to the total amount of the ink composition.

10. The ink composition according to Claim 8 or 9, wherein the polymer having a repeating unit represented by Formula (1) further comprises a repeating unit derived from a monomer having a nitrogen atom.

11. The ink composition according to any one of Claims 8 to 10, wherein the polymer having a repeating unit represented by Formula (1) has a content of 0.1 to 5 wt % relative to the total amount of the ink composition.

12. The ink composition according to any one of Claims 8 to 11 which comprises a cationically polymerizable compound and/or a radically polymerizable compound as a polymerizable compound.

13. The ink composition according to Claim 12, wherein the polymerizable compound comprises a compound selected from the group consisting of a monofunctional N-vinyl compound, phenoxyethyl acrylate and a cationically polymerizable cyclic ether compound.

14. The ink composition according to any one of Claims 8 to 13, wherein the polymer having a repeating unit represented by Formula (1) has a content of 30 to 80 wt % relative to the amount of pigment added.

15. The ink composition according to any one of claims 8 to 14, wherein the ink composition is an oil-based ink composition.

## Patentansprüche

1. Tintenstrahlaufzeichnungsverfahren umfassend:
einen Schritt des Ausstoßens einer Tintenzusammensetzung auf ein Aufzeichnungsmedium; und
einen Schritt des Härtens der Tintenzusammensetzung durch Belichten der ausgestoßenen Tintenzusammensetzung mit aktinischer Strahlung;
wobei die Tintenzusammensetzung:
C.I. Pigment Yellow 185; und
ein Polymer, das eine durch die Formel (1) dargestellte Wiederholungseinheit aufweist, umfasst: 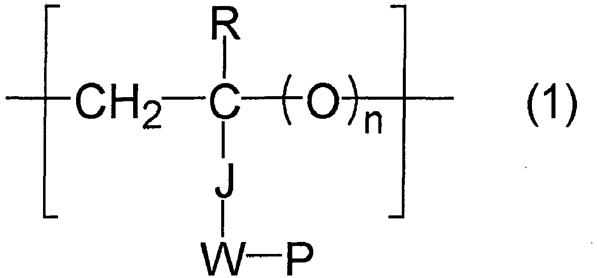 wobei:
R ein Wasserstoffatom oder eine Methylgruppe bezeichnet,
J -CO-, -COO-, -CONR¹-, -OCO-, eine Methylengruppe, oder eine Phenylengruppe bezeichnet,
R¹ ein Wasserstoffatom, eine Alkylgruppe oder eine Arylgruppe bezeichnet,
n 0 oder 1 bezeichnet,
W eine Einzelbindung oder eine divalente Verbindungsgruppe bezeichnet, und
P einen heterozyklischen Rest oder einen eine aromatische Chinon-Struktur-enthaltenden Rest bezeichnet, der ein Basisgerüst eines organischen Pigments bildet.

2. Verfahren nach Anspruch 1, wobei das C.I. Pigment Yellow 185 einen Gehalt von 15 bis 35 Gew.-%, bezogen auf die Gesamtmenge der Pigmentdispersion, aufweist.

3. Pigmentdispersion umfassend C.I. Pigment Yellow 185 und ein Polymer, das eine durch Formel (1) dargestellte Wiederholungseinheit, wie in Anspruch 1 definiert, und eine Wiederholungseinheit, die von einem polymerisierbaren Oligomer oder einem polymerisierbaren Polymer mit einer ethylenisch ungesättigten Bindung an einem Ende abgeleitet ist, aufweist.

4. Pigmentdispersion nach Anspruch 3, wobei das Polymer, das eine durch Formel (1) dargestellte Wiederholungseinheit aufweist, ferner eine Wiederholungseinheit umfasst, die von einem Monomer mit einem Stickstoffatom abgeleitet ist.

5. Pigmentdispersion nach Anspruch 3 oder 4, wobei das Polymer, das eine durch Formel (1) dargestellte Wiederholungseinheit aufweist, einen Gehalt von 5 bis 10 Gew.-%, bezogen auf die Gesamtmenge der Pigmentdispersion, aufweist.

6. Pigmentdispersion nach einem der Ansprüche 3 bis 5, die eine polymerisierbare Verbindung aufweist.

7. Pigmentdispersion nach Anspruch 6, wobei die polymerisierbare Verbindung eine kationisch polymerisierbare Verbindung und/oder eine radikalisch polymerisierbare Verbindung umfasst.

8. Tintenzusammensetzung umfassend eine Pigmentdispersion nach Anspruch 3.

9. Tintenzusammensetzung nach Anspruch 8, wobei das C.I. Pigment Yellow 185 einen Gehalt von 5 bis 12 Gew.-%, bezogen auf die Gesamtmenge der Tintenzusammensetzung, aufweist.

10. Tintenzusammensetzung nach Anspruch 8 oder 9, wobei das Polymer, das eine durch Formel (1) dargestellte Wiederholungseinheit aufweist, ferner eine Wiederholungseinheit umfasst, die von einem Monomer mit einem Stickstoffatom abgeleitet ist.

11. Tintenzusammensetzung nach einem der Ansprüche 8 bis 10, wobei das Polymer, das eine durch Formel (1) dargestellte Wiederholungseinheit aufweist, einen Gehalt von 0,1 bis 5 Gew.-%, bezogen auf die Gesamtmenge der Tintenzusammensetzung, aufweist.

12. Tintenzusammensetzung nach einem der Ansprüche 8 bis 11, die als eine polymerisierbare Verbindung eine kationisch polymerisierbare Verbindung und/oder eine radikalisch polymerisierbare Verbindung umfasst.

13. Tintenzusammensetzung nach Anspruch 12, wobei die polymerisierbare Verbindung eine Verbindung, ausgewählt aus der Gruppe bestehend aus einer monofunktionalen N-Vinylverbindung, Phenoxyethylacrylat und einer kationisch polymerisierbaren zyklischen Etherverbindung, umfasst.

14. Tintenzusammensetzung nach einem der Ansprüche 8 bis 13, wobei das Polymer, das eine durch Formel (1) dargestellte Wiederholungseinheit aufweist, einen Gehalt von 30 bis 80 Gew.-%, bezogen auf die Menge an zugefügtem Pigment, aufweist.

15. Tintenzusammensetzung nach einem der Ansprüche 8 bis 14, wobei die Tintenzusammensetzung eine ölbasierte Tintenzusammensetzung ist.

## Revendications

1. Procédé d'enregistrement à jet d'encre, comprenant :
une étape pour déverser une composition d'encre sur un support d'enregistrement, et
une étape pour durcir la composition d'encre en irradiant la composition d'encre déversée avec un rayonnement actinique ;
dans lequel la composition d'encre comprend :
le pigment C.I. Jaune 185, et
un polymère présentant un motif répété représenté par la formule (1) : 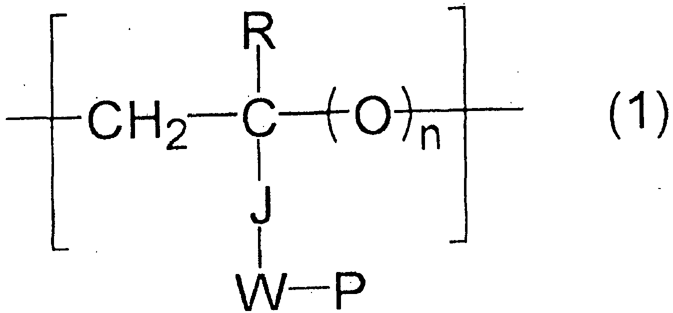 où
R indique un atome d'hydrogène ou un groupe méthyle ;
J indique -CO-, -COO-, -CONR¹-, -OCO-, un groupe méthylène, ou un groupe phénylène ;
R¹ indique un atome d'hydrogène, un groupe alkyle, ou un groupe aryle ;
n indique 0 ou 1 ;
W indique une liaison simple ou un groupe de liaison divalent, et
P indique un résidu hétérocyclique ou un résidu aromatique contenant une structure de quinone formant un squelette de base d'un pigment organique.

2. Procédé selon la revendication 1, dans lequel le pigment C.I. Jaune 185 présente une teneur allant de 15 à 35 % en poids par rapport à la quantité totale de la dispersion de pigment.

3. Dispersion de pigment comprenant le pigment C.I. Jaune 185 et un polymère présentant un motif répété représenté par la formule (1) selon la revendication 1, et un motif répété dérivé d'un oligomère polymérisable ou d'un polymère polymérisable présentant une liaison éthyléniquement insaturée sur une terminaison.

4. Dispersion de pigment selon la revendication 3, dans laquelle le polymère présentant un motif répété représenté par la formule (1) comprend en outre un motif répété dérivé d'un monomère présentant un atome d'azote.

5. Dispersion de pigment selon la revendication 3 ou 4, dans laquelle le polymère présentant un motif répété représenté par la formule (1) présente une teneur allant de 5 à 10 % en poids par rapport à la quantité totale de la dispersion de pigment.

6. Dispersion de pigment selon l'une quelconque des revendications 3 à 5, laquelle comprend un composé polymérisable.

7. Dispersion de pigment selon la revendication 6, dans laquelle le polymère polymérisable comprend un composé polymérisable par cations et/ou un composé polymérisable par radicaux.

8. Composition d'encre comprenant une dispersion de pigment selon la revendication 3.

9. Composition d'encre selon la revendication 8, dans laquelle le pigment C.I. Jaune 185 présente une teneur allant de 5 à 12 % en poids par rapport à la quantité totale de la composition d'encre.

10. Composition d'encre selon la revendication 8 ou 9, dans laquelle le polymère présentant un motif répété représenté par la formule (1) comprend en outre un motif répété dérivé d'un monomère présentant un atome d'azote.

11. Composition d'encre selon l'une quelconque des revendications 8 à 10, dans laquelle le polymère présentant un motif répété représenté par la formule (1) présente une teneur allant de 0,1 à 5 % en poids par rapport à la quantité totale composition d'encre.

12. Composition d'encre selon l'une quelconque des revendications 8 à 11, laquelle comprend un composé polymérisable par cations et/ou un composé polymérisable par radicaux comme composé polymérisable.

13. Composition d'encre selon la revendication 12, dans laquelle le composé polymérisable comprend un composé sélectionné parmi le groupe consistant en un composé de N-vinyle monofonctionnel, un acrylate de phénoxyéthyle, et un composé d'éther cyclique polymérisable par cations.

14. Composition d'encre selon l'une quelconque des revendications 8 à 13, dans laquelle le polymère présentant un motif répété représenté par la formule (1) présente une teneur allant de 30 à 80 % en poids par rapport à la quantité totale de pigment ajouté.

15. Composition d'encre selon l'une quelconque des revendications 8 à 14, dans laquelle la composition d'encre est une composition d'encre à base d'huile.
